(19) Europäisches Patentamt
European Patent Office
Office européen des brevets

(11) **EP 4 618 077 A1**

(12) **EUROPEAN PATENT APPLICATION**
published in accordance with Art. 153(4) EPC

(43) Date of publication:
**17.09.2025 Bulletin 2025/38**

(21) Application number: **23896311.0**

(22) Date of filing: **19.10.2023**

(51) International Patent Classification (IPC):
*G10L 19/018* (2013.01)

(52) Cooperative Patent Classification (CPC):
**G10L 19/018; G10L 19/02**

(86) International application number:
**PCT/CN2023/125448**

(87) International publication number:
**WO 2024/114156 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.11.2022 CN 202211496709**

(71) Applicant: **Tencent Technology (Shenzhen)
Company Limited
Shenzhen, Guangdong 518057 (CN)**

(72) Inventors:
• **HUANG, Leichao**
**Shenzhen, Guangdong 518057 (CN)**
• **YANG, Tianshu**
**Shenzhen, Guangdong 518057 (CN)**
• **LIU, Hualuo**
**Shenzhen, Guangdong 518057 (CN)**
• **LIU, Shaoteng**
**Shenzhen, Guangdong 518057 (CN)**
• **CHANG, Qinwei**
**Shenzhen, Guangdong 518057 (CN)**

(74) Representative: **EP&C
P.O. Box 3241
2280 GE Rijswijk (NL)**

(54) **AUDIO WATERMARK PROCESSING METHOD AND APPARATUS, AND COMPUTER DEVICE AND STORAGE MEDIUM**

(57) An audio processing method and apparatus, a computer device, and a storage medium are provided. The method includes: segmenting an input audio to obtain a plurality of audio segments, and determining an original frequency domain coefficient for each of the plurality of audio segments; obtaining reference information including positioning information and watermark information; determining, for each of the plurality of audio segments and based on the reference information, adjustment information for adjusting the original frequency domain coefficient of the respective audio segment; performing inverse frequency domain transformation on the adjustment information, to obtain a reference segment corresponding to the respective audio segment; and combining, for each of the plurality of audio segments, the respective audio segment and the corresponding reference segment, to obtain a target audio segment, thereby obtaining a plurality of target audio segments; and obtaining, based on the plurality of target audio segments, a target audio.

FIG. 2

## Description

### RELATED APPLICATION

This application claims priority to Chinese Patent Application No. 2022114967096, filed on November 28, 2022 and entitled "AUDIO PROCESSING METHOD AND APPARATUS, COMPUTER DEVICE, AND STORAGE MEDIUM", which is incorporated herein by reference in its entirety.

### FIELD OF THE TECHNOLOGY

This application relates to the field of audio technologies, and in particular, to an audio processing method and apparatus, a computer device, and a storage medium.

### BACKGROUND OF THE DISCLOSURE

In recent years, with the development of computer network technologies, people can conveniently watch, download, or record an audio work, and a large number of audio works are widely spread on a network. To protect the copyright of a digital work, an audio watermark technology has emerged.

A conventional audio watermark method, such as a time domain audio watermark method, is to transform watermark information into a string of binary data, and represent each piece of sampled data of an audio file as the binary data. Therefore, a lowest bit of each piece of sampled data is replaced with the binary data of the watermark information, thereby embedding a watermark in audio.

However, the conventional audio watermark method cannot resist various attacks, such as a random cropping attack and a time scale transformation attack. When the audio work is attacked, the watermark information is difficult to be detected, and there is a problem that an anti-attack effect of the audio watermark is not ideal.

### SUMMARY

According to various embodiments of this application, an audio processing method and apparatus, a computer device, a computer-readable storage medium, and a computer program product are provided.

According to an aspect, this application provides an audio processing method. The method includes:

segmenting an input audio to obtain a plurality of audio segments, and determining an original frequency domain coefficient for each of the plurality of audio segments;

obtaining reference information including positioning information and watermark information, the positioning information being configured for positioning the watermark information;

determining, for each of the plurality of audio segment based on the reference information, adjustment information for adjusting the original frequency domain coefficient of the respective audio segment, and performing inverse frequency domain transformation on the adjustment information, to obtain a reference segment corresponding to the respective audio segment; and

combining, for each of the plurality of audio segments, the respective audio segment and the corresponding reference segment, to obtain a target audio segment, thereby obtaining a plurality of target audio segments; and obtaining, based on the plurality of target audio segments, a target audio.

According to another aspect, this application further provides an audio processing apparatus. The apparatus includes:

a segmentation module, configured to segment an input audio to obtain a plurality of audio segments, and determine an original frequency domain coefficient for each of the plurality of audio segments;

a watermark module, configured to obtain reference information including watermark information and positioning information for positioning the watermark information;

an adjustment module, configured to determine, for each of the plurality of audio segments based on the reference information, adjustment information for adjusting the original frequency domain coefficient of the respective audio segment;

the adjustment module being further configured to perform inverse frequency domain transformation on the adjustment information, to obtain a reference segment corresponding to the respective audio segment; and

a combination module, configured to combine, for each of the plurality of audio segments, the respective audio segment and the corresponding reference segment, to obtain a target audio segment,, thereby obtaining a plurality of target audio segments; and obtain, based on the plurality of target audio segments, a target audio.

According to another aspect, this application further provides a computer device, including a memory and one or more processors, the memory having computer-readable instructions stored therein, and the computer-readable instructions, when executed by the processors, causing the one or more processors to perform operations of the foregoing audio processing method.

According to another aspect, this application further provides one or more non-volatile readable storage media, having computer-readable instructions stored therein, the computer-readable instructions, when executed by one or more processors, causing the one or more processors to perform operations of the foregoing audio processing method.

According to another aspect, this application further provides a computer-readable instruction product, including computer-readable instructions, the computer-readable instructions, when executed by a processor, performing operations of the foregoing audio processing method.

According to another aspect, this application further provides an audio detection method. The method includes:

segmenting an input audio to obtain a plurality of to-be-processed segments;

performing frequency domain transformation on each of the plurality of to-be-processed segments, to obtain a target frequency domain coefficient corresponding to each of the plurality of to-be-processed segments, and determining an adjustment mark corresponding to each bit of frequency domain coefficient in the target frequency domain coefficient;

determining, for each of the plurality of to-be-processed segments, unit embedding information corresponding to each of the plurality of to-be-processed segments based on a target frequency domain coefficient corresponding to the to-be-processed segment and an adjustment mark corresponding to each bit of frequency domain coefficient in the target frequency domain coefficient;

determining positioning information based on the unit embedding information corresponding to the plurality of to-be-processed segments; and

positioning, according to a position of the positioning information, watermark information from the unit embedding information corresponding to the plurality of to-be-processed segments.

According to another aspect, this application further provides an audio detection apparatus. The apparatus includes:

a segmentation module, configured to segment an input audio to obtain a plurality of to-be-processed segments;

a transformation module, configured to perform frequency domain transformation on each of the plurality of to-be-processed segments, to obtain a target frequency domain coefficient corresponding to each of the plurality of to-be-processed segments, and determine an adjustment mark corresponding to each bit of frequency domain coefficient in the target frequency domain coefficient;

a determining module, configured to determine, for each of the plurality of to-be-processed segments, unit embedding information corresponding to each of the plurality of to-be-processed segments based on a target frequency domain coefficient corresponding to the to-be-processed segment and an adjustment mark corresponding to each bit of frequency domain coefficient in the target frequency domain coefficient;

the determining module being further configured to determine positioning information based on unit embedding information corresponding to the plurality of to-be-processed segments; and

a positioning module, configured to position, according to a position of the positioning information, watermark information from the unit embedding information corresponding to the plurality of to-be-processed segments.

According to another aspect, this application further provides a computer device, including a memory and one or more processors, the memory having computer-readable instructions stored therein, and the computer-readable instructions, when executed by the processors, causing the one or more processors to perform the foregoing audio detection method.

According to another aspect, this application further provides one or more non-volatile readable storage media, having computer-readable instructions stored therein, the computer-readable instructions, when executed by one or more processors, causing the one or more processors to perform operations of the foregoing audio detection method.

According to another aspect, this application further provides a computer-readable instruction product, including computer-readable instructions, the computer-readable instructions, when executed by a processor, performing operations of the foregoing audio detection method.

Details of one or more embodiments of this application are provided in the following accompanying drawings and descriptions. Other features, objectives and advantages of this application will become definite from the specification, accompanying drawings and claims.

BRIEF DESCRIPTION OF THE DRAWINGS

To describe technical solutions in embodiments of this application or the conventional technology more clearly, the following briefly describes accompanying drawings required for describing the embodiments or the conventional technology. It is clear that the accompanying drawings in the following descriptions show merely the embodiments of this application, and a person of ordinary skill in the art may derive other drawings from these accompanying drawings without creative efforts.

FIG. 1 is a diagram of an application environment of an audio processing method according to an embodiment.

FIG. 2 is a schematic flowchart of an audio processing method according to an embodiment.

FIG. 3 is a schematic diagram of a structure of reference information according to an embodiment.

FIG. 4 is a schematic diagram of a structure of an adjustment mask according to an embodiment.

FIG. 5 is a schematic diagram of a structure of an adjustment mask according to another embodiment.

FIG. 6 is a schematic flowchart of an audio detection method according to an embodiment.

FIG. 7 is a schematic flowchart of an audio processing method according to another embodiment.

FIG. 8 is a schematic diagram of a principle of an adjustment mode for determining a frequency domain coefficient according to an embodiment.

FIG. 9 is a schematic flowchart of an audio detection method according to another embodiment.

FIG. 10 is a schematic flowchart of an audio detection method according to still another embodiment.

FIG. 11 is a structural block diagram of an audio processing apparatus according to an embodiment.

FIG. 12 is a structural block diagram of an audio detection apparatus according to an embodiment.

FIG. 13 is a diagram of an internal structure of a computer device according to an embodiment.

DESCRIPTION OF EMBODIMENTS

The following clearly and completely describes technical solutions in embodiments of this application with reference to accompanying drawings in the embodiments of this application. Apparently, the described embodiments are some embodiments of this application rather than all of the embodiments. All other embodiments obtained by a person of ordinary skill in the art based on the embodiments of this application without creative efforts shall fall within the protection scope of this application.

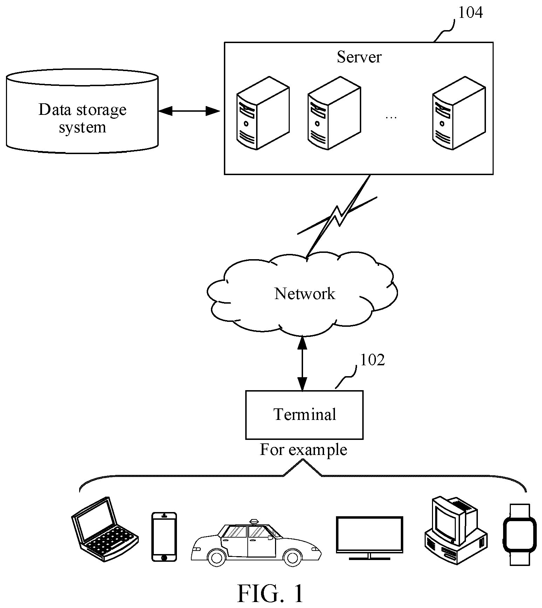

An audio processing method provided in this embodiment of this application may be applied to an application environment shown in FIG. 1. A terminal 102 is connected to a server 104 for communication. The terminal 102 and the server 104 may be directly or indirectly connected in a wired or wireless communication mode. This is not limited in this application. A data storage system may store data that the server 104 needs to process. The data storage system may be integrated on the server 104, or placed on a cloud or another server.

In some embodiments, the terminal 102 or the server 104 obtains a plurality of audio segments by dividing input audio, and determines an original frequency domain coefficient corresponding to each audio segment. Then, the terminal 102 or the server 104 obtains reference information, for any audio segment, determines, based on the reference information, adjustment information corresponding to the original frequency domain coefficient of the audio segment, and then obtains a reference segment corresponding to the audio segment by performing inverse frequency domain transformation on the adjustment information. Finally, the terminal 102 or the server 104 obtains a plurality of target audio segments by superimposing the audio segment with the corresponding reference segment, and obtains, based on a plurality of target audio segments, target audio embedded with watermark information.

The terminal 102 may be, but not limited to, one or more of a desktop computer, a notebook computer, a smart phone, a tablet computer, an Internet of Things device, a portable wearable device, or the like. The Internet of Things device may be one or more of a smart speaker, a smart television, a smart air condition, a smart in-vehicle device, or the like. The portable wearable device may be one or more of a smart watch, a smart bracelet, a head-mounted device, or the like.

The server 104 may be an independent physical server, or may be a server cluster or a distributed system formed by a plurality of physical servers, or may be a cloud server that provides basic cloud computing services such as a cloud service, a cloud database, cloud computing, a cloud function, cloud storage, a network service, cloud communication, a middle ware service, a domain name service, a security service, a CDN (Content Delivery Network), big data and an artificial intelligence platform.

In some embodiments, an Application (APP) application program may be loaded on the terminal, including an application program that needs to be installed separately, and an applet application that can be used without downloading and installing, for example, one or more of a browser client, a web client, an audio-/video client, or the like. The terminal may obtain audio transmitted by the server through the application program. Correspondingly, the server may also obtain audio uploaded by the terminal through the application program, and the like. The terminal or the server may detect the audio to determine whether the audio carries the watermark information.

The watermark information is information that needs to be embedded in an audio carrier. According to different application objectives, the watermark information may be one or more of a copyright identifier, a work serial number, text, an image, other audio, or the like.

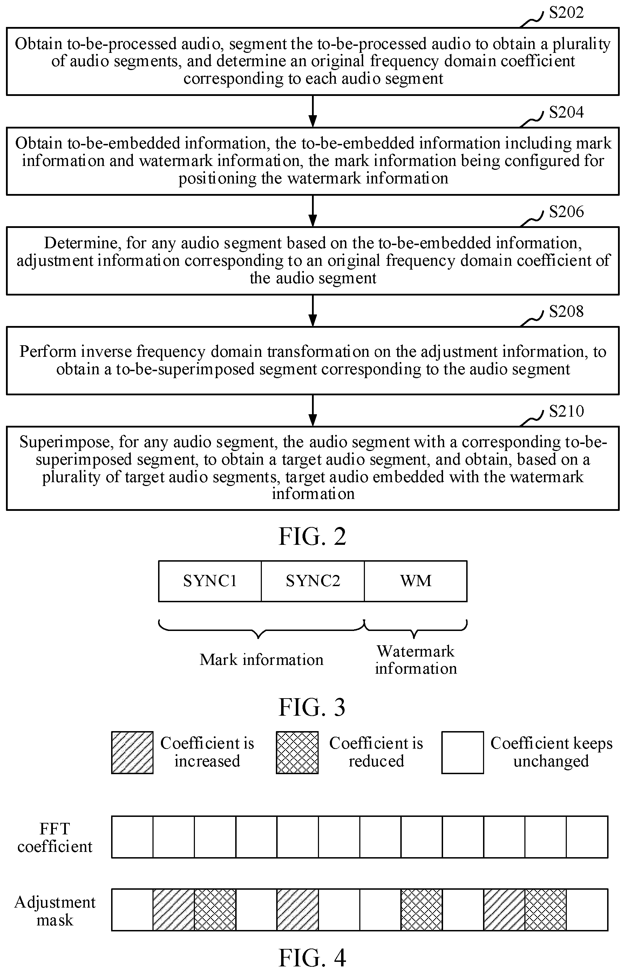

In some embodiments, as shown in FIG. 2, an audio processing method is provided. The method may be applied to a terminal or a server, or may be collaboratively performed by the terminal and the server. An example in which the method is applied to a computer device is used for description below. The computer device may be the terminal or the server in FIG. 1. The method includes the following operations.

Operation S202: Segment an input audio to obtain a plurality of audio segments, and determine an original frequency domain coefficient for each of the plurality of audio segments. In embodiments of the present application, operation S202 can include obtaining to-be-processed audio, segmenting the to-be-processed audio, to obtain a plurality of audio segments, and determining an original frequency domain coefficient corresponding to each audio segment.

Specifically, the computer device may obtain input audio from a local or a network, and segment the input audio into a plurality of audio segments. For example, a first second to a tenth second are grouped into a first audio segment, an eleventh second to a twentieth second are grouped into a second audio segment, ..., and the like. In some embodiments, the computer device may segment the input audio according to a preset length L, to obtain the plurality of audio segments. A plurality of, a plurality of bits, or the like in this application generally means more than one or more than one bit.

For each audio segment, the computer device performs frequency domain transformation on the audio segment, and transforms the audio segment from time domain to frequency domain, to obtain the original frequency domain coefficient of the audio segment. In some embodiments, the original frequency domain coefficient is a plurality of bits of frequency domain coefficients obtained by performing frequency domain transformation on the audio segment. Each bit of frequency domain coefficient represents a weight of each audio component of the audio segment mapped in frequency domain.

The frequency domain transformation includes, but is not limited to, one or more of discrete Fourier transform (DFT), discrete cosine transform (DCT), discrete wavelet transformation (DWT), discrete-time Fourier transform (DTFT), or the like. For example, the frequency domain transformation refers to performing fast Fourier transform (FFT) on the audio segment, and the frequency domain coefficient is an FFT coefficient obtained by performing FFT.

Operation S204: Obtain reference information, the reference information including positioning information and watermark information, the positioning information being configured for positioning the watermark information. In embodiments of the present application, operation S204 can include obtaining to-be-embedded information, the to-be-embedded information comprising mark information and watermark information, the mark information being configured for positioning the watermark information.

Specifically, the computer device obtains reference information, and the reference information includes positioning information and watermark information. The watermark information is configured for sourcing the audio. The positioning information is configured for positioning the watermark information, and a position of the watermark information can be accurately positioned through a position of the positioning information. The reference information is a sequence formed by binarized values, for example, a binary bit sequence formed by 0 and 1. Correspondingly, both the watermark information and the positioning information may be randomly generated binary bit sequences. Each binarized value that forms the reference information may be referred to as unit embedding information. The unit embedding information is a minimum information unit configured for forming the reference information.

To avoid difficulty in distinguishing between the watermark information and the positioning information during subsequent watermark detection, in some embodiments, the positioning information in the reference information includes at least first positioning information and second positioning information, and the first positioning information and the second positioning information meet a preset similarity condition. The preset similarity condition may be that the first positioning information is equal to the second positioning information, a difference between the first positioning information and the second positioning information is less than a first preset threshold, a similarity between the first positioning information and the second positioning information is greater than a second preset threshold, or the like. Certainly, the positioning information may alternatively include more than two pieces of positioning information, for example, first positioning information, second positioning information, third positioning information, fourth positioning information, ..., and the like. Different positioning information all meet the preset similarity condition. An example in which the positioning information includes the first positioning information, the second positioning information, and the third positioning information is used. In this case, the preset similarity condition is met between the first positioning information and the second positioning information, between the first positioning information and the third positioning information, and between the second positioning information and the third positioning information.

The preset similarity condition is that a difference between binarized sequences is less than the threshold. For example, the first positioning information is the same as the second positioning information. For example, both the first positioning information and the second positioning information are 011010101.

Therefore, at least two pieces of positioning information are set, during subsequent detection, the positioning information is first detected, and then the watermark information is detected according to a position of the positioning information, so that a position of the watermark information can be accurately positioned, and attack such as cropping and inserting other audio can be better resisted.

In some embodiments, a quantity of pieces of positioning information is a preset quantity, and a change in the preset quantity of pieces of positioning information meets a preset rule. For example, a plurality of pieces of positioning information form an arithmetic sequence, an opposite sequence, or have an increasing carry. For example, the first positioning information is 00010001 and the second positioning information is 00010011.

In some embodiments, the positioning information in the reference information may be located before the watermark information. For example, the reference information is the first positioning information, the second positioning information, ..., and the watermark information in sequence.

For example, as shown in FIG. 3, the reference information is a binary bit sequence W having N bits:

$$W = \{w_1, w_2, \ldots w_i, \ldots, w_N\}, i = 1,2, \ldots, N$$

Binary bits from a first bit to an $N_1^{th}$ bit are first positioning information $SYNC1$, binary bits from an $(N_1+1)^{th}$ bit to a $2N_1^{th}$ bit are second positioning information $SYNC2$, and binary bits from a $(2N_1+1)^{th}$ bit to an $N^{th}$ bit are watermark information $WM$. That is, an $i^{th}$ binary bit meets the following formula:

$$SYNC1 = \{w_i | 1 \le i \le N_1\};$$

$$SYNC2 = \{w_i | N_1 + 1 \le i \le 2N_1\};$$

$$WM = \{w_i | 2N_1 + 1 \le i \le N\};$$

In some other embodiments, the positioning information in the reference information may alternatively be located after the watermark information. For example, the reference information is the watermark information, the first positioning information, the second positioning information, and the like in sequence.

In still some other embodiments, the positioning information in the reference information may be interspersed with the watermark information. For example, the reference information is the first positioning information, the watermark information, and the second positioning information, or the first positioning information, the second positioning information, the watermark information, the third positioning information, and the like in sequence.

The foregoing terms first, second, and the like in this application are used to describe the positioning information in the reference information, but the positioning information is not limited by these terms. These terms are merely used to distinguish one piece of positioning information from another piece of positioning information. For example, the first positioning information may be referred to as the second positioning information, and similarly, the second positioning information may be referred to as the first positioning information, without departing from the scope of the various described embodiments, but unless the context clearly indicates otherwise, they are not the same positioning information. Similar cases also include a first type, a second type, and the like.

Operation S206: Determine, for each of the plurality of audio segments and based on the reference information, adjustment information for adjusting the original frequency domain coefficient of the respective audio segment. Operation S206 can include determining, for any audio segment based on the to-be-embedded information, adjustment information corresponding to an original frequency domain coefficient of the audio segment.

The adjustment information is information configured for indicating to adjust the original frequency domain coefficient, and may specifically include an adjustment amplitude and an adjustment mode. Specifically, for any audio segment, the computer device determines one piece of unit embedding information from the reference information and allocates the unit embedding information to the audio segment. In this way, the computer device may determine a target adjustment mode corresponding to an original frequency domain coefficient of the audio segment based on the allocated unit embedding information, and may further determine adjustment information of the original frequency domain coefficient based on the target adjustment mode and a preset adjustment amplitude.

In some embodiments, the computer device allocates corresponding unit embedding information to each audio segment in sequence according to a time sequence of the audio segment and according to a sequence of each piece of unit embedding information in the reference information. For example, it is assumed that the reference information is a binary bit sequence: {0, 1, 1, 0, 1, 1, 1, 1, 1, 0, 1, 1}, the computer device allocates 0 to a first audio segment, allocates 1 to a second audio segment, and allocates 1 to a third audio segment, ..., and so on. Certainly, the allocation may alternatively be performed according to a reverse sequence of the reference information. For example, the computer device allocates 1 to a first audio segment, allocates 1 to a second audio segment, allocates 0 to a third audio segment, ..., and so on.

Generally, a length of a segment of audio is greater than a length of the reference information. Therefore, the reference information may be cyclically and repeatedly embedded in a segment of audio. In this way, even if the audio is cropped or new audio is inserted subsequently, the watermark information can be detected provided that at least a piece of reference information can be detected in the audio.

In some embodiments, different unit embedding information may be configured for determining different adjustment modes. The adjustment on the original frequency domain coefficient may be to uniformly adjust all bits of frequency domain coefficients of the original frequency domain coefficient, to adjust each bit of frequency domain coefficient of the original frequency domain coefficient, or to adjust some frequency domain coefficients of the original frequency domain coefficient. The adjustment mode includes, but is not limited to, one or more of up, down, keep, negation, or zeroing.

In some other embodiments, for any audio segment, the computer device determines an initial adjustment mode corresponding to an original frequency domain coefficient of the audio segment, adjusts the initial adjustment mode in an adjustment direction represented by unit embedding information allocated for the audio segment, and uses an adjusted adjustment mode as a target adjustment mode corresponding to the audio segment.

In some embodiments, adjustment information of each bit of frequency domain coefficient in an original frequency domain coefficient corresponding to any audio segment is determined based on a target adjustment mode matching the corresponding frequency domain coefficient and a preset adjustment amplitude. An adjustment amplitude may be preset for each adjustment mode, for example, increasing by 20%, reducing 20%, or keeping unchanged (that is, the adjustment amplitude is 0).

For example, the computer device may randomly determine an initial adjustment mode of each bit of frequency domain coefficient in the original frequency domain coefficient of each audio segment. The initial adjustment mode may be performing up or down processing the frequency domain coefficient. Then, the computer device updates the initial adjustment mode according to the unit embedding information allocated for each audio segment, to obtain a final target adjustment mode. For example, unit embedding information 1 represents that the initial adjustment mode is not processed, and unit embedding information 0 represents that negation is performed on the initial adjustment mode. For another example, the unit embedding information 1 represents that an up amplitude is further increased for an up initial adjustment mode; and the unit embedding information 0 represents that a down amplitude is further reduced for a down initial adjustment mode.

Therefore, based on the unit embedding information allocated for each audio segment, the computer device may determine the target adjustment mode of the original frequency domain coefficient corresponding to each audio segment, and may further determine the adjustment information of the original frequency domain coefficient based on the target adjustment mode and the preset adjustment amplitude.

In some embodiments, each of L bits of frequency domain coefficients in the original frequency domain coefficient corresponding to each audio segment corresponds to an adjustment mark, and each adjustment mark is preset with a corresponding initial adjustment mode. For any audio segment, the computer device adjusts L initial adjustment modes in an adjustment direction represented by unit embedding information allocated for the audio segment, to obtain a target adjustment mode corresponding to each bit of frequency domain coefficient. Then, the computer device determines the adjustment information corresponding to each of the L bits of frequency domain coefficients based on target adjustment modes corresponding to the L bits of frequency domain coefficients and adjustment amplitudes respectively corresponding to L adjustment marks, L being a positive integer greater than 1.

Operation S208: Perform inverse frequency domain transformation on the adjustment information, to obtain a reference segment corresponding to the respective audio segment. In embodiments of the present application, operation S208 can include performing inverse frequency domain transformation on the adjustment information, to obtain a to-be-superimposed segment corresponding to the audio segment.

Specifically, for any audio segment, after determining adjustment information of an original frequency domain coefficient of the audio segment, the computer device may perform inverse frequency domain transformation on the adjustment information, and transform the adjustment information of the original frequency domain coefficient from frequency domain to time domain, to obtain an audio waveform. The audio waveform is a reference segment corresponding to the audio segment.

The inverse frequency domain transformation is an inverse operation process of frequency domain transformation, for example, inverse discrete Fourier transform, inverse discrete cosine transform, inverse discrete wavelet transform, or inverse fast Fourier transform.

Therefore, inverse frequency domain transformation is performed on the adjustment information corresponding to the audio segment. After the adjustment information is transformed to time domain, the audio segment is superimposed with an original audio segment, instead of directly adjusting the original frequency domain coefficient, so that impact on audio quality can be greatly avoided.

Operation S210: Combine, for each of the plurality of audio segments, the respective audio segment and the corresponding reference segment, to obtain a target audio segment, thereby obtaining a plurality of target audio segments; and obtain, based on the plurality of target audio segments, a target audio. In embodiments of the present application, operation S210 can include superimposing, for any audio segment, the audio segment and a corresponding to-be-superimposed segment, to obtain a target audio segment and obtaining, based on a plurality of target audio segments, target audio embedded with the watermark information.

Specifically, for each audio segment, after obtaining a reference segment corresponding to the audio segment, the computer device superimposes the reference segment with the audio segment in time domain, and a superimposed audio segment is a target audio segment. The computer device superimposes the reference segment with a corresponding audio segment, for example, may superimpose a sound waveform of the reference segment with a sound waveform of the audio segment.

Since each audio segment is discrete and an audio signal is continuous, in some embodiments, after obtaining the reference segment, the computer device may perform windowing on the reference segment and then superimpose the reference segment with a corresponding audio segment, to obtain the target audio embedded with the watermark information. Windowing is to perform weighted processing on the reference segment by using a window function, so that frequency domain energy is closer to a real frequency spectrum. The window function includes, but is not limited to, one or more of a rectangular window function, a Hamming window function, a Hanning window function, or the like.

In this way, the computer device may obtain, based on the plurality of target audio segments, the target audio embedded with the watermark information. For example, the computer device may splice all the target audio segments in sequence, to obtain complete target audio. For another example, in an audio transmission scenario, for ease of transmission and storage, the computer device may separately transmit each target audio segment, and each separately transmitted target audio segment forms the target audio.

In some embodiments, the obtaining, based on a plurality of target audio segments, target audio embedded with the watermark information includes: determining a time sequence corresponding to each of the plurality of target audio segments; and splicing the plurality of target audio segments according to the time sequence corresponding to each target audio segment, to obtain the target audio, where the target audio is embedded with the watermark information.

Specifically, when segmenting the input audio, the computer device records time information, for example, a timestamp, corresponding to each audio segment. After obtaining target audio segments, the computer device determines time information of each target audio segment, where the time information of the target audio segment is the same as time information of a corresponding audio segment before superimposition.

The computer device determines, according to the time information corresponding to each target audio segment, a time sequence corresponding to each target audio segment, and therefore splices the plurality of target audio segments according to the time sequence to obtain the target audio. In this way, the target audio segments are spliced in the time sequence to obtain the complete target audio, and the watermark information of the target audio is embedded into the audio in frequency domain through unit embedding information, so that there is no need to modify the audio in time domain, and sound quality of the audio is protected.

In the foregoing audio processing method, the input audio is segmented to obtain the plurality of audio segments, and the original frequency domain coefficient corresponding to each audio segment is determined. In addition, the reference information is obtained, the adjustment information of the original frequency domain coefficient corresponding to each audio segment is determined based on the reference information, and inverse frequency domain transformation is performed based on the adjustment information to obtain the reference segments, so that direct medication on the original frequency domain coefficient in frequency domain is avoided, and impact on audio quality is avoided as much as possible. In this way, the reference segments that are obtained by performing inverse frequency domain transformation based on the adjustment information are superimposed with corresponding audio segments, to obtain the plurality of target audio segments, so that the target audio is obtained, thereby embedding the watermark information in frequency domain. Since a frequency coefficient can better correspond to an actual audio pitch, audio in which watermark information is embedded is difficult to perceive by a human ear, and has good transparency. In addition, since the watermark information is embedded in frequency domain, robustness of a frequency domain coefficient energy mean value is used, and a detection rate and a high robustness are high in the face of a time domain attack. In addition, since the reference information carries the positioning information, when subsequent audio is subjected to attack such as random cropping and time scale transformation, the position of the watermark information can be accurately positioned according to the positioning information, so that the watermark information is accurately detected, and has strong anti-attach performance.

The robustness is a degree of a capability of an audio watermark to resist various attacks. After the audio embedded with the watermark information is subjected to various attack, the watermark information can still be well retained and can be accurately extracted from an audio carrier, which indicates the high robustness. The transparency is a change degree of the audio in which the watermark information is embedded. A watermark embedding mode with good transparency can make audio indifferent from auditory perception before and after the watermark is embedded. The detection rate is a ratio of a quantity of pieces of audio from which the watermark information is successfully extracted to a total quantity of pieces of audio.

In some embodiments, the original frequency domain coefficient includes L bits of frequency domain coefficients, L being a positive integer greater than 1, and the reference information includes a plurality of pieces of unit embedding information. The determining, for any audio segment based on the reference information, adjustment information corresponding to an original frequency domain coefficient of an audio segment includes: allocating a piece of unit embedding information to each audio segment from the reference information; determining, for any audio segment, an adjustment mark matching each of L bits of frequency domain coefficients of the audio segment; determining, based on the unit embedding information allocated for the audio segment, target adjustment modes respectively corresponding to L adjustment marks; and determining, according to the target adjustment modes respectively corresponding to the L adjustment marks, the adjustment information corresponding to the original frequency domain coefficient of the audio segment.

Specifically, the computer device allocates a piece of unit embedding information to each audio segment from the reference information. For example, the computer device allocates corresponding unit embedding information to each audio segment in sequence according to a sequence of the audio segment and according to a sequence of each piece of unit embedding information in the reference information.

For example, the computer device allocates the corresponding unit embedding information to the audio segment from the reference information in sequence according to the sequence of the audio segment, for example, for reference information 10010011010, unit embedding information 1 is allocated to an audio segment A, unit embedding information 0 is allocated to an audio segment B, unit embedding information 0 is allocated to an audio segment C, and the like. Therefore, both the positioning information and the watermark information can be naturally embedded into the input audio.

For each audio segment, the computer device determines an adjustment mark matching each bit of frequency domain coefficient in an original frequency domain coefficient corresponding to each audio segment. The adjustment mark represents an initial adjustment mode corresponding to each bit of frequency domain coefficient. The initial adjustment mode may be any one of a plurality of preset adjustment modes.

A type of the adjustment mark includes, but are not limited to, one or more of up, down, keep, or the like. The adjustment mark may be represented by a character. For example, a sequence formed by adjustment marks may be {up, down, down, keep, ...}, or {1, 2, 0, 1, 0, 2, ...} (where an adjustment mark 1 represents up, an adjustment mark 2 represents down, and an adjustment mark 0 represents keep).

For ease of description, one of the plurality of audio segments is used as an example for description, and the audio segment is referred to as a current audio segment. After determining unit embedding information corresponding to the current audio segment, the computer device adjusts, in an adjustment direction represented by the unit embedding information, an initial adjustment mode corresponding to each adjustment mark matching the current audio segment, to obtain a target adjustment mode.

In this way, the computer device may finally determine adjustment information of an original frequency domain coefficient corresponding to the current audio segment according to target adjustment modes respectively corresponding to L adjustment marks matching the current audio segment and with reference to preset adjustment amplitudes respectively corresponding to the L adjustment marks.

In the foregoing embodiments, the adjustment mark corresponding to each audio segment is determined, and the initial adjustment mode indicated by the adjustment mark is adjusted under impact of the allocated unit embedding information, to finally obtain the target adjustment mode, so that when the reference information is binarized information, the adjustment mode of the frequency domain coefficient can be enriched as much as possible by using a combination of the adjustment mark and the unit embedding information, and the adjustment information can be accurately determined for each bit of frequency domain coefficient.

In some embodiments, the allocating a piece of unit embedding information to each audio segment from the reference information includes: determining, according to a sequence of the unit embedding information in the reference information, current unit embedding information from the reference information; determining, according to a time sequence of the audio segment, a current audio segment from the plurality of audio segments; allocating the current unit embedding information to the current audio segment; using a next piece of unit embedding information as current unit embedding information of a next allocation, and using a next audio segment of the current audio segment as a current audio segment of the next allocation; returning to the operation of allocating the current unit embedding information to the current audio segment and continuing to perform the operation until last-bit unit embedding information in the reference information is allocated; and using first-bit unit embedding information in the reference information as current unit embedding information of a next cycle, and performing a plurality of cycle allocations until all audio segments are allocated with the unit embedding information.

Specifically, when allocating unit embedding information for M audio segments, the computer device allocates the unit embedding information to the M audio segments starting from first-bit unit embedding information in sequence according to the sequence of each piece of unit embedding information in the reference information. M being a positive integer greater than 1.

Specifically, the computer device determines current to-be-allocated unit embedding information according to the sequence of each piece of unit embedding information in the reference information. The computer device allocates the current unit embedding information to a current audio segment of the M audio segments, then uses a next piece of unit embedding information as current unit embedding information of a next allocation, and uses a next audio segment of the current audio segment as a current audio segment of the next allocation. The next audio segment of the current audio segment may be an audio segment whose time sequence is after a time sequence of the current audio segment and that is adjacent to the current audio segment.

After this allocation is completed, the computer device continues to perform the next allocation until last-bit unit embedding information in the reference information is allocated. If an audio length exactly matches the length of the reference information, the corresponding unit embedding information is allocated to each audio segment, and the computer device completes an allocation process.

When the audio length is greater than the length of the reference information, the computer device re-uses the first-bit unit embedding information as current unit embedding information of a next cycle, and selects a first audio segment as a current audio segment from the audio segments on which allocation is not performed, and performs allocation again. Therefore, the computer device performs a plurality of cycle allocations until all the audio segments are allocated with the corresponding unit embedding information.

In the foregoing embodiments, the unit embedding information in the reference information is cyclically allocated to each audio segment, so that the reference information is cyclically embedded into the input audio. In this way, even if the audio is cropped or new audio is inserted subsequently, the watermark information can be detected provided that at least one piece of reference information can be detected in the audio, and strong anti-attack performance and high robustness are achieved.

In some embodiments, the determining, for any audio segment, an adjustment mark matching each of L bits of frequency domain coefficients of the audio segment includes: obtaining, for any audio segment, an adjustment mask corresponding to the audio segment, where the adjustment mask includes the L adjustment marks; and using an $I^{th}$ adjustment mark in the adjustment mask as an adjustment mark of an $I^{th}$ bit of frequency domain coefficient in L bits of frequency domain coefficients of the audio segment, where I is a positive integer greater than 1 and less than or equal to L.

Each audio segment corresponds to an adjustment mask, and the adjustment mask is configured for indicating how to adjust each bit of frequency domain coefficient in the original frequency domain coefficient.

The adjustment mask includes a plurality of adjustment marks. A quantity of bits of the adjustment mark is the same as a quantity of bits of the original frequency domain coefficient, and both are L. The adjustment masks of different audio segments may be randomly generated.

For example, an FFT coefficient of an audio segment A, for example, has L bits of coefficients, and an adjustment mask corresponding to the audio segment A also has L bits. An adjustment mark may be set to each bit in the adjustment mask. For example, as shown in FIG. 4, different adjustment marks are represented in different filling modes in the figure. A first adjustment mark in the adjustment mask indicates that a coefficient keeps unchanged, and in this case, the computer device keeps a value of a first bit of coefficient in the FFT coefficient unchanged; a second adjustment mark in the adjustment mask indicates that the coefficient is increased, an in this case, the computer device increases a value of a second bit of coefficient in the FFT coefficient; a third adjustment mark in the adjustment mask indicates that a coefficient is reduced, and in this case, the computer device reduces a value of a third bit of coefficient in the FFT coefficient; and so on. An amplitude by which the computer device increases or reduces the FFT coefficient may be a preset amplitude, for example, increasing or reducing the FFT coefficient by 10%.

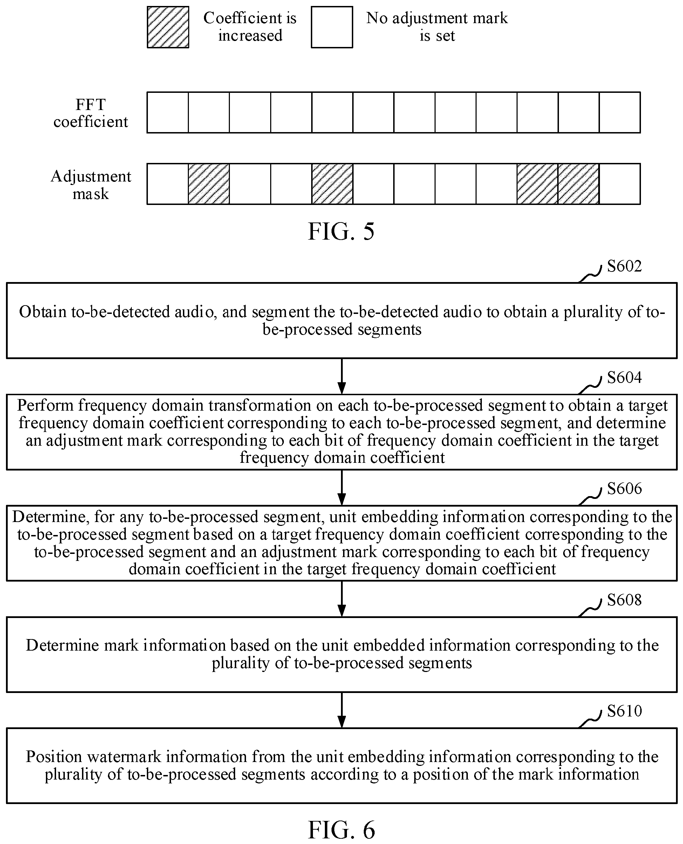

For another example, in the adjustment mask, the adjustment mark may be set only at a position at which up or down processing is required, and no adjustment mark is set at the remaining positions, which represents that no processing is performed on coefficients. For example, as shown in FIG. 5, for one or more bits of coefficients that need to be increased, adjustment marks representing that the coefficients are increased are set at corresponding positions in the adjustment mask.

Specifically, for any audio segment, the computer device obtains an adjustment mask corresponding to the audio segment, to obtain L adjustment marks. The quantity of adjustment marks in the adjustment mask is the same as a quantity of bits of an original frequency domain coefficient, and both are L.

For any audio segment, the computer device determines an original frequency domain coefficient corresponding to the audio segment. For a current frequency domain coefficient in the original frequency domain coefficient, the computer device determines a target adjustment mark at a same position from the L adjustment marks according to a position of the current frequency domain coefficient in the original frequency domain coefficient, and uses the target adjustment mark as an adjustment mark matching the current frequency domain coefficient. For example, a first adjustment mark corresponds to a first bit of frequency domain coefficient, a second adjustment mark corresponds to a second bit of frequency domain coefficient, an $I^{th}$ adjustment mark corresponds to an $I^{th}$ bit of frequency domain coefficient, and the like. For each bit of frequency domain coefficient, the computer device performs the foregoing processing, so that the adjustment mark corresponding to each frequency domain coefficient may be determined.

Therefore, for any audio segment, the computer device may determine an initial adjustment mode for each bit of frequency domain coefficient in an original frequency domain coefficient of the audio segment based on an adjustment mask corresponding to the audio segment, and update the initial adjustment mode with reference to unit embedding information allocated for the audio segment, to obtain a final target adjustment mode. Therefore, it is determined that each bit of frequency domain coefficient of the audio segment is increased, keeps unchanged, or is reduced specifically. Based on a preset up amplitude and a preset down amplitude, the computer device may determine adjustment information of the original frequency domain coefficient. The adjustment information of the original frequency domain coefficient includes adjustment information for each bit of frequency domain coefficient in the original frequency domain coefficient, for example, increasing each bit of frequency domain coefficient by 20%, or reducing each bit of frequency domain coefficient by 20%.

For example, it is assumed that the reference information is a binary bit sequence formed by 0 and 1. When unit embedding information allocated for an audio segment is a bit 1, an adjustment mode of an adjustment mark (for example, represented by up, down, or keep) in an adjustment mask is unchanged. To be specific, the adjustment mark up indicates that a frequency domain coefficient is increased, the adjustment mark down indicates that the frequency domain coefficient is reduced, and the adjustment mark keep indicates that the frequency domain coefficient keeps unchanged. When unit embedding information allocated for an audio segment is a bit 0, an adjustment mode of an adjustment mark (for example, represented by up, down, or keep) in an adjustment mask is opposite. To be specific, the adjustment mark up indicates that a frequency domain coefficient is reduced, the adjustment mark down indicates that the frequency domain coefficient is increased, and the adjustment mark keep indicates that the frequency domain coefficient keeps unchanged. In this case, adjustment information delta for each bit of frequency domain coefficient may be represented by the following formula:

$$\begin{cases} deltaA(i) = +fftA(i)^{\alpha} \\ deltaB(i) = -fftB(i)^{\alpha} \end{cases} \quad w = 1;$$

$$\begin{cases} deltaA(i) = -fftA(i)^{\alpha} \\ deltaB(i) = +fftB(i)^{\alpha} \end{cases} \quad w = 0;$$

w represents unit embedding information, *fft*() represents a frequency domain coefficient, A(i) represents a frequency domain coefficient corresponding to up, and *B*(*i*) represents a frequency domain coefficient corre-

sponding to down. $\alpha$ is a watermark intensity, and is configured for balancing audio quality and watermark robustness; and a larger value of the watermark intensity indicates stronger robustness of a watermark and poorer sound quality. Generally, a value of $\alpha$ may range from 0.02 to 0.05.

In the foregoing embodiments, the adjustment mask corresponding to each audio segment is obtained, where the adjustment mask includes a plurality bits of adjustment marks that correspond to the audio segments and whose quantity of bits is the same as the quantity of bits of the original frequency domain coefficient; for a current frequency domain coefficient in the original frequency domain coefficient, a target adjustment mark at a corresponding position is determined from the plurality of bits of adjustment marks according to a position of the current frequency domain coefficient in the original frequency domain coefficient; and the target adjustment mark is used as an adjustment mark matching the current frequency domain coefficient.

Since the reference information is a binarized value, in some embodiments, a value type of the unit embedding information includes a first type and a second type, and for any adjustment mark, an adjustment direction of a target adjustment mode that corresponds to each adjustment mark and that is determined based on the first type of unit embedding information is opposite to an adjustment direction of a target adjustment mode determined based on the second type of unit embedding information.

Specifically, each adjustment mark represents that the frequency domain coefficient is processed in which adjustment direction (up or down), and the unit embedding information is configured for processing the adjustment direction determined by using the adjustment mark. Processing modes represented by unit embedding information of different value types are opposite.

For example, for an audio segment A, adjustment marks corresponding to an original frequency domain coefficient of the audio segment A are respectively {up, down, down, keep, ...}. When unit embedding information allocated for the audio segment A is of the first type (for example, 1), adjustment modes represented by the adjustment marks corresponding to the audio segment A keep unchanged and are still {up, down, down, keep, ...}, that is, adjustment directions of target adjustment modes respectively corresponding to the adjustment marks keep unchanged. When unit embedding information allocated for the audio segment A is of the second type (for example, 0), the computer device performs negation on the adjustment modes represented by the adjustment marks corresponding to the audio segment A, that is, {down, up, up, keep, ...}. That is, the target adjustment modes respectively corresponding to the adjustment marks are opposite to the original adjustment modes. For an adjustment mark that keeps unchanged, an adjustment mark obtained by the computer device performing negation the adjustment mark is still itself.

Therefore, the adjustment direction of each adjustment mark is determined based on the unit embedding information, so that the target adjustment mode is obtained, and the target adjustment modes determined based on the unit embedding information of different value types have different adjustment directions. The watermark information cannot be obtained only by using the unit embedding information or the adjustment mask, so that a mode of embedding the watermark in the audio is more secure and stable.

In some embodiments, the determining, based on unit embedding information allocated for the audio segment, target adjustment modes respectively corresponding to L adjustment marks includes: determining a value type of the unit embedding information allocated for the audio segment; when the value type is the first type, using initial adjustment modes respectively corresponding to the L adjustment marks as the target adjustment modes respectively corresponding to the L adjustment marks; and when the value type is the second type, performing reverse processing on the initial adjustment modes respectively corresponding to the L adjustment marks, to obtain the target adjustment modes respectively corresponding to the L adjustment marks.

Specifically, for any audio segment of the plurality of audio segments, the computer device determines a value type of unit embedding information corresponding to the audio segment.

When the value type of the unit embedding information is the first type, the computer device uses the initial adjustment modes respectively corresponding to the L adjustment marks as the target adjustment modes respectively corresponding to the L adjustment marks. In other words, the computer device keeps the adjustment mode represented by each adjustment mark unchanged.

For example, if the adjustment mark up indicates that up processing is performed on a frequency domain coefficient, when the value type of the unit embedding information is 1 (the first type), the computer device determines that a final target adjustment mode of a corresponding frequency domain coefficient is up processing.

When the value type of the unit embedding information is the second type, reverse processing is performed on the initial adjustment modes respectively corresponding to the L adjustment marks, to obtain the target adjustment modes respectively corresponding to the L adjustment marks. In other words, the computer device performs negation on the adjustment mode represented by each adjustment mark.

For example, if the adjustment mark up indicates that up processing is performed on a frequency domain coefficient, when the value type of the unit embedding information is 0 (the second type), the computer device determines that a final target adjustment mode of a corresponding frequency domain coefficient is down processing.

In the foregoing embodiments, the adjustment mark corresponding to each audio segment is determined, and the initial adjustment mode indicated by the adjustment mark is adjusted under impact of the allocated unit embedding information, to finally obtain the target adjustment mode. When the reference information is binarized information, the adjustment mode of the frequency domain coefficient can be enriched as much as possible by using a combination of the adjustment mark and the unit embedding information, and an adjustment amount can be accurately determined for each bit of frequency domain coefficient.

This application further provides an application scenario, and the foregoing audio processing method is applied to the application scenario. Specifically, the audio processing method is applied to the application scenario, for example, as follows. A terminal uploads input audio to a server. After obtaining the input audio, the server segments the input audio to obtain a plurality of audio segments, and determines an original frequency domain coefficient corresponding to each audio segment. In addition, the server obtains reference information, determines, for any audio segment, adjustment information corresponding to an original frequency domain coefficient of the audio segment based on the reference information, performs inverse frequency domain transformation on the adjustment information, to obtain a reference segment corresponding to the audio segment, finally superimposes the audio segments with corresponding reference segments, to obtain a plurality of target audio segments, and obtains, based on the plurality of target audio segments, target audio embedded with watermark information. The server then returns the target audio to the terminal. Alternatively, the server may distribute the target audio embedded with the watermark information to each terminal via a content delivery network, to share and disseminate the audio. Certainly, this is not limited thereto. The audio processing method provided in this application may alternatively be applied to other application scenarios, such as online livestreaming, streaming media sharing, and online classroom.

Based on the same inventive concept, an embodiment of this application further provides an audio detection method. The method may be applied to a terminal or a server, or may be collaboratively performed by the terminal and the server. As shown in FIG. 6, an example in which the method is applied to a computer device is used for description below. The computer device may be the terminal or the server. The method includes the following operations.

Operation S602: Segment an input audio to obtain a plurality of to-be-processed segments. In embodiments of the present application, operation S602 can include obtaining to-be-detected audio, and segmenting the to-be-detected audio to obtain a plurality of to-be-processed segments.

Specifically, the computer device may obtain input audio from a local or a network, and segment the input audio into a plurality of audio segments having a preset length. The preset length is greater than or equal to a length of reference information.

In some embodiments, according to the length of the reference information, the computer device traverses the to-be-detected audio according to the length of the reference information according to a preset step size and by using a sliding window of a same length. A length of the preset step size may be set according to an actual requirement, and different step sizes may be configured for coordinating detection accuracy and detection efficiency.

Operation S604: Perform frequency domain transformation on each of the plurality of to-be-processed segments, to obtain a target frequency domain coefficient corresponding to each of the plurality of to-be-processed segments, and determine an adjustment mark corresponding to each bit of frequency domain coefficient in the target frequency domain coefficient. In embodiments of the present application, operation S604 can include performing frequency domain transformation on each to-be-processed segment, to obtain a target frequency domain coefficient corresponding to each to-be-processed segment, and determining an adjustment mark corresponding to each bit of frequency domain coefficient in the target frequency domain coefficient.

Specifically, for each to-be-processed segment, the computer device performs frequency domain transformation on the to-be-processed segment, and obtains the target frequency domain coefficient corresponding to each to-be-processed segment through calculation. The target frequency domain coefficient is a plurality of bits of frequency domain coefficients obtained by performing frequency domain transformation on the to-be-processed segment, and each bit of frequency domain coefficient represents a weight of each audio component of the to-be-processed segment mapped in frequency domain. The target frequency domain coefficient may be a frequency domain coefficient after a watermark (that is, superimposed with audio corresponding to adjustment information of a frequency domain coefficient) is embedded, or may be an original frequency domain coefficient that has not been changed (for example, the to-be-detected audio is not embedded with watermark information).

For each to-be-processed segment, after determining the corresponding target frequency domain coefficient, the computer device may determine, based on an adjustment mask, an adjustment mark corresponding to each bit of frequency domain coefficient. Each adjustment mark is preset with a corresponding initial adjustment mode, and the initial adjustment mode corresponding to each adjustment mark is, for example, one of up, down, or keep. In some embodiments, the adjustment mask is an adjustment mask used in an audio processing process, and L adjustment marks in a specific sequence are recorded in the adjustment mask.

Operation S606: Determine, for each of the plurality of to-be-processed segments, unit embedding information corresponding to each of the plurality of to-be-processed segments based on a target frequency domain coefficient corresponding to the to-be-processed segment and an adjustment mark corresponding to each bit of frequency domain coefficient in the target frequency domain coefficient. In embodiments of the present application, operation S606 can include determining, for any to-be-processed segment, unit embedding information corresponding to the to-be-processed segment based on a target frequency domain coefficient corresponding to the to-be-processed segment and an adjustment mark corresponding to each bit of frequency domain coefficient in the target frequency domain coefficient.

Specifically, for any to-be-processed segment, the computer device determines a target adjustment mode based on a target frequency domain coefficient corresponding to the to-be-processed segment and an adjustment mark corresponding to each bit of frequency domain coefficient in the target frequency domain coefficient and with reference to an initial adjustment mode corresponding to the adjustment mark and according to a frequency domain energy value corresponding to one or more frequency domain coefficients corresponding to different types of adjustment marks, and further determines unit embedding information corresponding to each to-be-processed segment based on the determined target adjustment mode.

For example, when a watermark is embedded, up processing and down processing are preset on the adjustment mark. In this case, during watermark detection, the computer device selects one or more frequency domain coefficients whose mark is up from the target frequency domain coefficient and calculates a frequency domain energy mean value, selects one or more frequency domain coefficients whose mark is down from the target frequency domain coefficient and calculates a frequency domain energy mean value, compares a difference between the two frequency domain energy mean values to determine the target adjustment mode, and further determines the unit embedding information corresponding to each to-be-processed segment.

When a value type of the unit embedding information is determined reversely herein, the value type of the unit embedding information corresponds to setting of the value type of the unit embedding information in a watermark embedding process. For example, when the value type of the unit embedding information in the watermark embedding process is set to a first type, up processing is still performed when the adjustment mark is up, and down processing is still performed when the adjustment mark is down. When the value type of the unit embedding information in the watermark embedding process is set to a second type, down processing is performed when the adjustment mark is up processing, and up processing is performed if the adjustment mark is down processing. In a watermark detection process, a frequency domain energy mean value corresponding to a first adjustment mark is calculated to obtain a first energy mean value, and a frequency domain energy mean value corresponding to a second adjustment mark is calculated to obtain a second energy mean value. The unit embedding information is determined according to magnitudes of the first energy mean value and the second energy mean value. For example, if a first energy mean value dbA is greater than a second energy mean value dbB, it is determined that the unit embedding information of the to-be-processed segment is 1, and if dbA is less than or equal to dbB, it is determined that the unit embedding information of the to-be-processed segment is 0.

Operation S608: Determine positioning information based on the unit embedding information corresponding to the plurality of to-be-processed segments. In embodiments of the present application, operation S608 can include determining mark information based on unit embedding information corresponding to the plurality of to-be-processed segments.

Specifically, the computer device performs traversal to obtain the plurality of to-be-processed segments. The computer device may detect, according to the plurality of to-be-processed segments, whether the positioning information exists or whether the positioning information is correct.

A mode in which the computer device detects the positioning information corresponds to a mode in which the positioning information is set when the watermark is embedded. For example, when the watermark is embedded, the reference information is constructed in the mode shown in FIG. 3. To be specific, the reference information includes first positioning information SYNC1, second positioning information SYNC2, and watermark information WM in sequence, and the first positioning information SYNC1 is equal to the second positioning information SYNC2. In this case, during watermark detection, the computer device detects whether first two pieces of unit embedding information of the preset length (corresponding to a length of the positioning information) are equal, and therefore detects whether the positioning information exists.

In some other embodiments, when the watermark is embedded, a difference between the first positioning information SYNC1 and the second positioning information SYNC2 is set to be less than a preset threshold. In this case, during watermark detection, the computer device detects whether a similarity between first two pieces of unit embedding information of the preset length meets a similarity condition (for example, the difference is less than the preset threshold), and therefore detects whether the positioning information exists.

In some other embodiments, when the watermark is embedded, the reference information is set to include the first positioning information SYNC1, the watermark information WM, and the second positioning information SYNC2 in sequence. In this case, during watermark detection, the computer device detects whether a similarity between a first piece of unit embedding information of the preset length (corresponding to the length of the positioning information) and a third piece of unit embedding information of the preset length meets a similarity condition, and therefore detects whether the positioning information exists.

Operation S610: Position watermark information from the unit embedding information corresponding to the plurality of to-be-processed segments according to a position of the positioning information. In embodiments of the present application, operation S610 can include positioning, according to a position of the mark information, watermark information from the unit embedding information corresponding to the plurality of to-be-processed segments.

Specifically, after detecting the positioning information, the computer device determines a position of watermark information according to a relative position between the positioning information and the watermark information in the pre-constructed reference information and according to the position of the positioning information, and further positions the watermark information from the unit embedding information corresponding to the plurality of to-be-processed segments.

For example, the computer device compares whether first N1 pieces of unit embedding information (corresponding to an SYNC1 part) are equal to immediately following N1 pieces of unit embedding information (corresponding to an SYNC2 part). If two parts are equal, it is determined that the positioning information is detected. In this case, the computer device may determine last N2 pieces of unit embedding information as the watermark information. For another example, the computer device compares whether first N1 pieces of unit embedding information (corresponding to an SYNC1 part) are equal to last N1 pieces of unit embedding information (corresponding to an SYNC2 part). If two parts are equal, it is determined that the positioning information is detected. In this case, the computer device may determine N2 pieces of unit embedding information between the two parts of positioning information as the watermark information.

In the foregoing audio detection method, the to-be-detected audio is divided to obtain the plurality of to-be-processed segments, frequency domain transformation is respectively performed on the plurality of to-be-processed segments to obtain the target frequency domain coefficients, then based on the target frequency domain coefficient corresponding to each to-be-processed segment, the unit embedding information corresponding to each to-be-processed segment is determined through reversing, the positioning information is determined therefrom, and finally, the watermark information is positioned according to the position of the positioning information, so that the watermark information can be accurately detected. Since the watermark information is embedded in the frequency domain by using frequency domain transform, during detection, after frequency domain transformation is performed on the to-be-processed segment, the positioning information is determined by using the robustness of the frequency domain coefficient energy mean value, so that the detection rate and the robustness are high in the face of a time domain attack.

In some embodiments, the for any to-be-processed segment, determining unit embedding information corresponding to the to-be-processed segment based on the target frequency domain coefficient corresponding to the to-be-processed segment and an adjustment mark corresponding to each bit of frequency domain coefficient in the target frequency domain coefficient includes: for any to-be-processed segment, determining frequency domain energy values corresponding to different adjustment marks based on the target frequency domain coefficient corresponding to the to-be-processed segment and the adjustment mark corresponding to each bit of frequency domain coefficient in the target frequency domain coefficient; and determining, based on the frequency domain energy values corresponding to the different adjustment marks, the unit embedding information corresponding to the to-be-processed segment.

Specifically, for each to-be-processed segment, the computer device calculates, based on the target frequency domain coefficient of the to-be-processed segment and the adjustment mark corresponding to each bit of frequency domain coefficient in the target frequency domain coefficient of the to-be-processed segment, frequency domain energy values of one or more target frequency domain coefficients corresponding to the same adjustment mark. The computer device calculates the frequency domain energy values of the one or more target frequency domain coefficients, which may be calculating an absolute value of each bit of frequency domain coefficient in the target frequency domain coefficient, and using a sum of the absolute values as the frequency domain energy value. Certainly, this is not limited to this, and for example, may alternatively be a square difference, a square sum, a weighted sum, a standard deviation, or the like.

Therefore, the computer device determines, based on the frequency domain energy values of different adjustment marks, the target adjustment modes corresponding to the different adjustment marks through reversing, thereby determining the unit embedding information corresponding to the to-be-processed segment.

In the foregoing embodiment, the unit embedding information is restored through the frequency domain energy value of the frequency domain coefficient, which fully utilizes the stability of the frequency domain energy, can still accurately detect the watermark information after being subjected to a time domain attack, and has the high robust.

In some embodiments, the adjustment mark includes a first adjustment mark and a second adjustment mark. For example, the first adjustment mark corresponds to up processing, and the second adjustment mark corresponds to down processing. Correspondingly, the determining, based on the frequency domain energy values corresponding to the different adjustment marks, the unit embedding information corresponding to the to-be-processed segment, and the determining, based on the frequency domain energy values of the different adjustment marks in each to-be-processed segment, the unit embedding information corresponding to each to-be-processed segment includes: determining, based on the frequency domain energy values corresponding to the different adjustment marks, a frequency domain energy mean value corresponding to the first adjustment mark and a frequency domain energy mean value corresponding to the second adjustment mark; and determining the unit embedding information corresponding to the to-be-processed segment based on a difference between the frequency domain energy mean value corresponding to the first adjustment mark and the frequency domain energy mean value corresponding to the second adjustment mark.

Specifically, any one of the plurality of to-be-processed segments is used as a current to-be-processed segment, and the computer device determines a frequency domain energy mean value corresponding to different adjustment marks in the current to-be-processed segment. For example, the computer device selects, for the target frequency domain coefficient corresponding to the current to-be-processed segment, one or more frequency domain coefficients marked as the first adjustment mark from the target frequency domain coefficient, and calculates a frequency domain energy mean value of the one or more frequency domain coefficients; and selects one or more frequency domain coefficients marked as the second adjustment mark from the target frequency domain coefficient, and calculates a frequency domain energy mean value of the one or more frequency domain coefficients.

The computer device compares the frequency domain energy mean value corresponding to the first adjustment mark with the frequency domain energy mean value corresponding to the second adjustment mark, and determines, based on a difference between the frequency domain energy mean value corresponding to the first adjustment mark and the frequency domain energy mean value corresponding to the second adjustment mark, the target adjustment mode corresponding to each adjustment mark.

For example, for each bit of frequency domain coefficient in the target frequency domain coefficient, the computer device selects, a frequency domain coefficient with the adjustment mark being up processing (up) to calculate a first energy mean value dbA, selects a frequency domain coefficient with the adjustment mark being down processing (down) to calculate a second energy mean value dbB, compares the first energy mean value dbA with the second energy mean value dbB, and determines, based on magnitudes of the first energy mean value dbA and the second energy mean value dbB, the target adjustment mode corresponding to each adjustment mark. Therefore, the computer device determines the unit embedding information corresponding to the current to-be-processed segment based on the target adjustment mode corresponding to each adjustment mark. For example, in a case that dbA is greater than dbB, it is determined that the unit embedding information of the to-be-processed segment is 1; and in a case that dbA is less than or equal to dbB, it is determined that the unit embedding information of the to-be-processed segment is 0.

In the foregoing embodiment, the unit embedding information is restored through the frequency domain energy mean value of the frequency domain coefficient, which fully utilizes the stability of the frequency domain energy, can still accurately detect the watermark information after being subjected to a time domain attack, and has the high robust.

In some embodiments, the determining positioning information based on the unit embedding information corresponding to the plurality of to-be-processed segments includes: extracting, in the unit embedding information corresponding to the plurality of to-be-processed segments, at least two segments of unit embedding information sequences having a preset length from a preset position, where each segment of unit embedding information sequence includes a plurality of pieces of unit embedding information; and obtaining, based on the at least two segments of extracted unit embedding information sequences, the positioning information through restoration.

Specifically, the computer device extracts, for the unit embedding information corresponding to the plurality of to-be-processed segments, the at least two segments of unit embedding information sequences having the preset length from a preset position. The preset position corresponds to the position of the positioning information in the reference information when the watermark is embedded. For example, when the watermark is embedded, the reference information is set to be first positioning information having a length N1, second positioning information having the length N1, and watermark information having a length N2 in sequence. In this case, during watermark detection, the computer device extracts, from the plurality of unit embedding information, the first two segments of unit embedding information sequences having the length N1 respectively, to detect the positioning information.

Therefore, the computer device compares the two segments of extracted unit embedding information sequences, to restore the positioning information. For example, the computer device compares whether a first segment of unit embedding information sequence (first N1 pieces of unit embedding information) is equal to an immediately following second segment of unit embedding information sequence (immediately following the N1 pieces of unit embedding information), and determines that the positioning information is detected if the first segment of unit embedding information sequence is equal to the second segment of unit embedding information sequence.

For another example, in some embodiments, the at least two segments of unit embedding information sequences having the preset length include a first restoration sequence and a second restoration sequence, and the obtaining, based on the at least two segments of extracted unit embedding information sequences, the positioning information through restoration includes: comparing the first restoration sequence with the second restoration sequence; and determining the positioning information based on the first restoration sequence and the second restoration sequence in a case that a similarity between the first restoration sequence and the second restoration sequence is less than a threshold.

Specifically, the computer device compares whether the similarity between the first restoration sequence and the second restoration sequence meets a similarity condition, and determines that the positioning information is detected if the similarity is less than a preset threshold.

The similarity between the first restoration sequence and the second restoration sequence may be, for example, that a carry difference between the first restoration sequence and the second restoration sequence is less than the threshold, the similarity between the first restoration sequence and the second restoration sequence regularly transforms, a difference between each bit of unit embedding information in the first restoration sequence and each bit of unit embedding information in the second restoration sequence is less than the threshold, or a quantity of pieces of unit embedding information at the same position but with different value types in the first restoration sequence and the second restoration sequence is less than the threshold.

In the foregoing embodiment, the unit embedding information sequence with the same length and the same position as the positioning information is extracted, and whether the positioning information is detected is determined based on the at least two segments of unit embedding information sequences. Therefore, in a case that the positioning information is detected, the position of the watermark information is positioned, then the watermark information is extracted, and the accuracy is higher. In addition, by embedding the positioning information and the watermark information into the audio together, in a case that the audio is cropped or attacked in the time domain, the stability of the frequency domain coefficient energy can still be used for calculation, so that the position of the watermark information is accurately positioned, and the resistance to attack is higher.

In some embodiments, the positioning, according to a position of the positioning information, watermark information from the unit embedding information corresponding to the plurality of to-be-processed segments includes: using, according to the position of the positioning information, a plurality of pieces of unit embedding information that are adjacent to the positioning information and whose lengths reach a preset length in the unit embedding information corresponding to the plurality of to-be-processed segments as the watermark information.

Since the relative position between the positioning information and the watermark information in the reference information is known, during watermark detection, according to the position of the positioning information, the computer device can position the position of the watermark information. Specifically, the computer device uses, according to the position of the positioning information, the plurality of pieces of unit embedding information that are adjacent to the positioning information and whose lengths reach the preset length in the unit embedding information corresponding to the plurality of to-be-processed segments as the watermark information.

For example, when the watermark is embedded, the reference information is set to be first positioning information having a length N1, second positioning information having the length N1, and watermark information having a length N2 in sequence. In this case, during watermark detection, the computer device uses last N2 pieces of unit embedding information as the watermark information.

In the foregoing embodiment, the watermark information is positioned according to the position of the positioning information. When the positioning information cannot be detected, it can be determined that the audio is corrupted or is not embedded with specific watermark information. The sequences corresponding to the watermark information are not required to be compared one by one, so that the efficiency is higher. In addition, the watermark information is determined based on positioning the positioning information, which can ensure that the extracted watermark information is more accurate.

To improve the detection efficiency, when the to-be-detected audio is detected, the computer device may traverse in sequence in a form of a sliding window. When correct positioning information is detected at any moment, traversal may be stopped, and the watermark information is detected according to the position of the positioning information. In some other embodiments, when a timeliness requirement is not high or a requirement for the detection accuracy is high, the computer device may completely detect the to-be-detected audio once. Since the reference information is usually repeatedly cyclically embedded into the to-be-detected audio, a plurality of pieces of positioning information may be detected. In this case, the computer device may perform voting processing on each bit of a plurality of segments of unit embedding information sequences, and use the value type of the unit embedding information with a higher proportion as a final value type of the unit embedding information at this bit.

The detected watermark information may be configured for sourcing the audio, copyright verification of the audio, or the like. In some embodiments, the method further includes: extracting positioned watermark information; and obtaining source watermark information, comparing the extracted watermark information with the source watermark information, and performing verification on a release source of the to-be-detected audio based on a comparison result.

Specifically, after the position of the watermark information is positioned, the computer device extracts the positioned watermark information. According to the extracted watermark information, the computer device compares the extracted watermark information with the source watermark information, and determines, based on the comparison result, whether the corresponding to-be-detected audio is embedded with the source watermark information, so that verification can be performed on the release source of the to-be-detected audio. The source watermark information is, for example, preset watermark information corresponding to a service.

For example, for a music application program, the music application program has a copyright for audio. When a user shares the audio through the music application program, the music application program embeds source watermark information for the shared audio. After to-be-detected audio is subsequently obtained, the computer device detects watermark information of the to-be-detected audio, and compares whether the watermark information is the same as the source watermark information. If the watermark information is the same as the source watermark information, it means that the to-be-detected audio is the audio transmitted from the music application program. In other words, a release source of the to-be-detected audio is the music application program. When the computer device determines that the watermark information of the to-be-detected audio is different from the source watermark information, or no watermark information is detected, it means that the to-be-detected audio is not transmitted from the music application program. In a case that the music application program has a dedicated copyright for the audio, it may be further determined that the to-be-detected audio is unauthorized audio.

In the foregoing embodiment, verification is performed on the audio work based on the watermark information, so that an audio work can be prevented from being disseminated without authorization, a copyright of the audio work can be protected, and rights and interests of an author of the audio work can be ensured.

This application further provides an application scenario, and the foregoing audio detection method is applied to the application scenario. Specifically, the audio detection method is applied to the application scenario, for example, as follows. A server obtains to-be-detected audio. The to-be-detected audio may be uploaded by a terminal or obtained by the server from a network. The server obtains a plurality of to-be-processed segments by dividing the to-be-detected audio, and obtains a target frequency domain coefficient corresponding to each to-be-processed segment by performing frequency domain transformation on each to-be-processed segment, thereby determining unit embedding information corresponding to each to-be-processed segment. The server determines positioning information based on the unit embedding information corresponding to the plurality of to-be-processed segments, and then positions, according to a position of the positioning information, watermark information from the unit embedding information corresponding to the plurality of to-be-processed segments. Based on the determined watermark information, the server performs traceability or verification on the to-be-detected audio, or determines whether the to-be-detected audio is tampered with, attacked, or the like. Certainly, this is not limited thereto. The audio detection method provided in this application may further be applied to other application scenarios, such as online livestreaming, online classroom, audio sharing, and the like.

Descriptions are provided below with reference to a watermark embedding process and a watermark detection process.

For example, it is assumed that the reference information is a binary bit sequence W, which is divided into three parts: first positioning information SYNC1, second positioning information SYNC2, and watermark information WM. The first positioning information SYNC1 is equal to the second positioning information SYNC2, and may be referred to as a synchronization code. The watermark information WM is an actual embedded watermark.

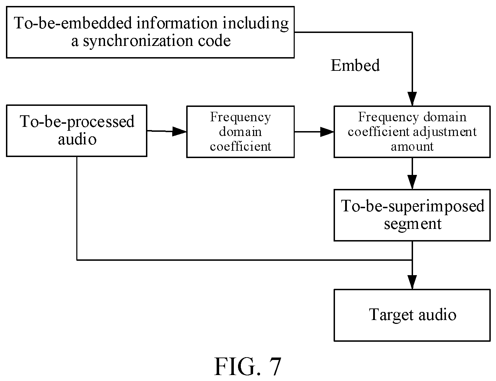

In the watermark embedding process, as shown in FIG. 7, the computer device first divides the input audio into a plurality of audio segments having a length L, performs Fourier transform on each audio segment, and calculates a frequency domain coefficient, such as an FFT coefficient, of each audio segment. For example, the computer device determines an adjustment mask matching each audio segment. For example, among a plurality of adjustment marks in the adjustment mask, the computer device randomly extracts L/4 adjustment marks to be up processing (up), L/4 adjustment marks to be down processing (down), and the remaining adjustment marks to be keeping unchanged (keep). Quantities of various types of adjustment marks are determined herein, and during calculation of a frequency domain energy value during subsequent watermark detection, a corresponding calculation is to be performed based on the quantities.

For any audio segment, when the allocated unit embedding information is 1, for each frequency domain coefficient in the original frequency domain coefficient corresponding to the audio segment, the computer device performs up processing on the frequency domain coefficient if the adjustment mark corresponds to up processing, and performs down processing on the frequency domain coefficient if the adjustment mark corresponds to down processing. Conversely, when the allocated unit embedding information is 0, for each frequency domain coefficient in the original frequency domain coefficient corresponding to the audio segment, the computer device performs down processing on the frequency domain coefficient if the adjustment mark corresponds to up processing, and performs up processing on the frequency domain coefficient if the adjustment mark corresponds to down processing. In this way, the computer device can obtain an adjustment amount of each frequency domain coefficient.

Further, the computer device performs inverse Fourier transform on the adjustment amount of the frequency domain coefficient, to obtain a time domain modification difference of the audio including the watermark information, that is, a reference segment. The reference segment is the audio whose adjustment amount corresponds to the time domain. The computer device windows the reference segment and superimposes the reference segment with a corresponding audio segment, thereby obtaining a target audio segment. For all audio segments, the computer device performs the foregoing processing. Therefore, for the entire audio, each bit of reference information can be cyclically embedded, and finally, the target audio segments are spliced in sequence, to obtain complete target audio embedded with a watermark.

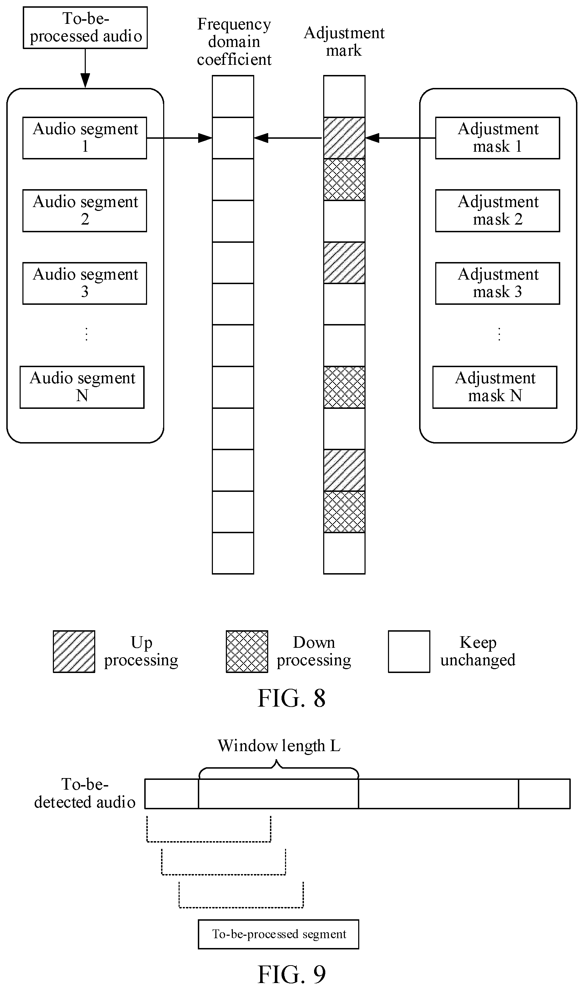

However, in a bit embedding processing on any audio segment, as shown in FIG. 8, the computer device divides the input audio, to obtain an audio segment 1, an audio segment 2, an audio segment 3, ..., and an audio segment N. Using the audio segment 1 as an example, the computer device performs frequency domain transformation to calculate a frequency domain coefficient, for example, an FFT coefficient. In addition, the computer device obtains an adjustment mask corresponding to the audio segment 1, for example, an adjustment mask 1. Adjustment marks respectively corresponding to each bit of frequency domain coefficient included in the adjustment mask 1 are shown in FIG. 8.

For example, for a first-bit frequency domain coefficient, an adjustment mark at a corresponding position in the adjustment mask 1 represents that the adjustment mode is keeping unchanged. In this case, regardless of whether the unit embedding information embedded in the audio segment 1 is 1 or 0, the computer device keeps the frequency domain coefficient unchanged.

For a second-bit frequency domain coefficient, an adjustment mark at a corresponding position in the adjustment mask 1 represents that the adjustment mode is up processing. In this case, when the unit embedding information embedded in the audio segment 1 is 1, the computer device determines that a final adjustment mode of the second-bit frequency domain coefficient is up processing; and when the unit embedding information embedded in the audio segment 1 is 0, the computer device determines that the final adjustment mode of the second-bit frequency domain coefficient is down processing.

For a third-bit frequency domain coefficient, an adjustment mark at a corresponding position in the adjustment mask 1 represents that the adjustment mode is down processing. In this case, when the unit embedding information embedded in the audio segment 1 is 1, the computer device determines that a final adjustment mode of the second-bit frequency domain coefficient is down processing; and when the unit embedding information embedded in the audio segment 1 is 0, the computer device determines that the final adjustment mode of the second-bit frequency domain coefficient is up processing.

However, in the subsequent watermark detection process, the computer device first detects the first positioning information SYNC1 and the second positioning information SYNC2, and determines whether the first positioning information SYNC1 is equal to the second positioning information SYNC2. If the first positioning information SYNC1 is equal to the second positioning information SYNC2, it means that the audio segments from which the watermarks are extracted are correctly synchronized, and then the watermark information WM is extracted.

As shown in FIG. 9, the computer device traverses the to-be-detected audio with a preset window length L and a step size S, where the window length L=2*N1+N2. N1 is a length of the positioning information SYNC1 and SYNC2, and N2 is a length of the watermark information WM. It is assumed that the to-be-detected audio is under attack, for example, a part is cropped, and the computer device cannot detect the complete reference information several times at the beginning of the traversal.

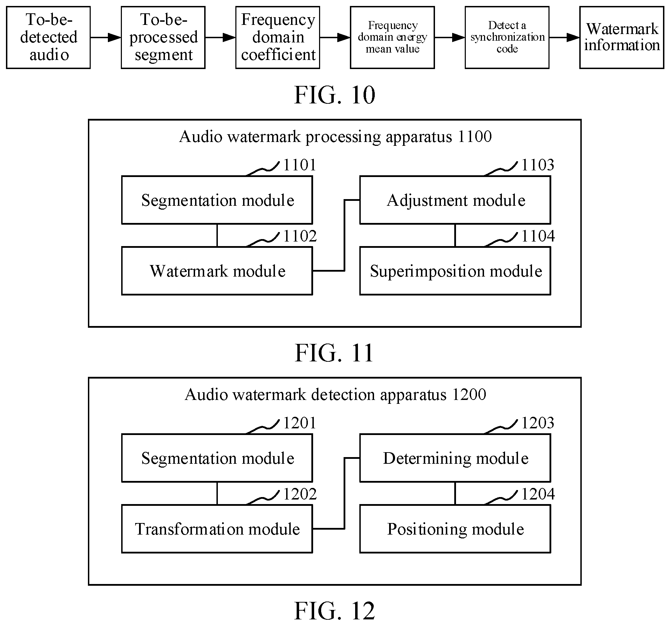

As shown in FIG. 10, for the to-be-detected audio, when a to-be-processed segment is detected, the computer device first performs frequency domain transformation to obtain frequency domain coefficients corresponding to the to-be-processed segment, selects frequency domain coefficients with the adjustment mark being up processing (up) to calculate an energy mean value dbA, and selects frequency domain coefficients with the adjustment mark being down processing (down) to calculate an energy mean value dbB. The calculation of the energy mean values by the computer device may be, for example, calculation of a mean value of absolute values of the frequency domain coefficients. Therefore, the computer device compares magnitudes of the energy mean values dbA and dbB. If dbA is greater than dbB, it is determined that the unit embedding information of the to-be-processed segment is 1; and if dbA is less than or equal to dbB, it is determined that the unit embedding information of the to-be-processed segment is 0.

The value type of the unit embedding information obtained through specific restoration is related to the setting of the unit embedding information when the watermark is embedded. The computer device repeats the foregoing operations until the unit embedding information sequence of a length of the reference information is extracted.

Further, as shown in FIG. 10, for the unit embedding information sequence, the computer device compares whether first N1 pieces of unit embedding information (the synchronization code corresponding to the SYNC1 part) and immediately following N1 pieces of unit embedding information (the synchronization code corresponding to the SYNC2 part) are equal. If two parts are equal, it is determined that the positioning information is detected. In this case, the computer device may determine last N2 pieces of unit embedding information as the watermark information. Therefore, the watermark of the to-be-detected audio is successfully detected. If the positioning information is not detected this time, the computer device traverses a next to-be-processed segment, and repeats the foregoing operations.

Therefore, the audio is embedded with the watermark through the foregoing mode. By using the robustness of the energy mean value of the audio in the frequency domain to scaling, it is resistant to synchronization attacks such as cropping and time domain scaling, and the robust is high. By encoding the reference information, two identical random 0, 1 bit sequences are generated as the positioning information, and the watermark information is set after the positioning information. During detection, it is determined whether the two pieces of positioning information are equal, and the position of the watermark information is positioned accordingly, so that the watermark can be positioned more accurately, and the accuracy is higher. In addition, the watermark is embedded in the frequency domain by using the robustness of the frequency domain coefficient energy mean value, so that the watermark information can also be correctly detected after recovery for a time domain attack. In addition, instead of directly modifying the frequency domain coefficient, the adjustment amount of the frequency domain coefficient is converted into the time domain and windowing superimposition is performed, so that the sound quality is less affected.

Operations in flowcharts involved in the foregoing embodiments are displayed in sequence based on indication of arrows, but the operations are not necessarily performed in sequence based on a sequence indicated by the arrows. Unless indicated clearly, the operations do not need to be performed in a strict sequence, and can be performed in another sequence. In addition, at least some operations in the flowcharts involved in the foregoing embodiments may include a plurality of operations or a plurality of stages, and these operations or stages are not necessarily performed at a same moment, but may be performed at different moments. The operations or stages are not necessarily performed in sequence, but may be performed by turn or alternately with other operations or at least part of operations or stages in other operations.

Based on the same inventive concept, an embodiment of this application further provides an audio processing apparatus for implementing the foregoing audio processing method. The implementation solution for solving the problem provided by this apparatus is similar to the implementation solution recorded in the foregoing method. Therefore, for the specific limitations in one or more embodiments of the audio processing apparatus provided below, reference may be made to the foregoing limitations for the audio processing method.

In an embodiment, as shown in FIG. 11, an audio processing apparatus 1100 is provided, including: a segmentation module 1101, a watermark module 1102, an adjustment module 1103, and a combination module 1104. In embodiments of the present application, the combination module can be a superimposition module.

The segmentation module 1101 is configured to segment an input audio to obtain a plurality of to-be-processed segments, and determine an original frequency domain coefficient for each of the plurality of audio segments.

The watermark module 1102 is configured to obtain reference information including watermark information and positioning information for positioning the watermark information.

The adjustment module 1103 is configured to determine, for each of the plurality of audio segments and based on the reference information, adjustment information for adjusting the original frequency domain coefficient of the respective audio segment.

The adjustment module 1103 is further configured to perform inverse frequency domain transformation on the adjustment information, to obtain a reference segment corresponding to the respective audio segment.

The combination module 1104 is configured to combine, for each of the plurality of audio segments, the respective audio segment and the corresponding reference segment, to obtain a target audio segment, thereby obtaining a plurality of target audio segments; and obtain, based on the plurality of target audio segments, a target audio.

In some embodiments, the positioning information in the reference information includes at least first positioning information and second positioning information, and the first positioning information and the second positioning information meet a preset similarity condition.

In some embodiments, the original frequency domain coefficient includes L bits of frequency domain coefficients, L is a positive integer greater than 1, the reference information includes a plurality of pieces of unit embedding information, and the adjustment module is further configured to: allocate a piece of unit embedding information to each audio segment from the reference information; determine, for any audio segment, an adjustment mark matching each of L bits of frequency domain coefficients of the audio segment; determine, based on the unit embedding information allocated for the audio segment, target adjustment modes respectively corresponding to L adjustment marks; and determine, according to the target adjustment modes respectively corresponding to the L adjustment marks, the adjustment information corresponding to the original frequency domain coefficient of the audio segment.

In some embodiments, the adjustment module is further configured to determine, according to a sequence of the unit embedding information in the reference information, current unit embedding information from the reference information; determine, according to a time sequence of the audio segment, a current audio segment from the plurality of audio segments; allocate the current unit embedding information to the current audio segment; use a next piece of unit embedding information as current unit embedding information of a next allocation, and use a next audio segment of the current audio segment as a current audio segment of the next allocation; return to the operation of allocating the current unit embedding information to the current audio segment and continue to perform the operation until last-bit unit embedding information in the reference information is allocated; and use first-bit unit embedding information in the reference information as current unit embedding information of a next cycle, and perform a plurality of cycle allocations until all audio segments are allocated with the unit embedding information.

In some embodiments, the adjustment module is further configured to obtain, for any audio segment, an adjustment mask corresponding to the audio segment, where the adjustment mask includes the L adjustment marks; and use an $l^{th}$ adjustment mark in the adjustment mask as an adjustment mark of an $l^{th}$ bit of frequency domain coefficient in L bits of frequency domain coefficients of the audio segment, where $l$ is a positive integer greater than 1 and less than or equal to L.

In an embodiment, a value type of the unit embedding information includes a first type and a second type, and for any adjustment mark, an adjustment direction of a target adjustment mode determined based on the unit embedding information of the first type is opposite to an adjustment direction of a target adjustment mode determined based on the unit embedding information of the second type.

In some embodiments, the adjustment module is further configured to determine a value type of the unit embedding information allocated for the audio segment; in a case that the value type is the first type, use initial adjustment modes respectively corresponding to the L adjustment marks as the target adjustment modes respectively corresponding to the L adjustment marks; and in a case that the value type is the second type, perform reverse processing on the initial adjustment modes respectively corresponding to the L adjustment marks, to obtain the target adjustment modes respectively corresponding to the L adjustment marks. In some embodiments, the superposition module is further configured to determine a time sequence corresponding to each of the plurality of target audio segments; splice the plurality of target audio segments according to the time sequence corresponding to each target audio segment, to obtain the target audio, where the target audio is embedded with the watermark information.

The modules in the foregoing audio processing apparatus may be implemented entirely or partially by software, hardware, or a combination thereof. The foregoing modules may be built in or independent of a processor of a computer device in a hardware form, or may be stored in a memory of the computer device in a software form, so that the processor invokes and performs an operation corresponding to each of the foregoing modules.

Based on the same inventive concept, an embodiment of this application further provides an audio detection apparatus for implementing the foregoing audio detection method. The implementation solution for solving the problem provided by this apparatus is similar to the implementation solution recorded in the foregoing method. Therefore, for the specific limitations in one or more embodiments of the audio detection apparatus provided below, reference may be made to the foregoing limitations for the audio detection method.

In an embodiment, as shown in FIG. 12, an audio detection apparatus 1200 is provided, including: a segmentation module 1201, a transformation module 1202, a determining module 1203, and a positioning module 1204.

The segmentation module 1201 is configured to segment an input audio to obtain a plurality of to-be-processed segments.

The transformation module 1202 is configured to perform frequency domain transformation on each of the plurality of to-be-processed segments, to obtain a target frequency domain coefficient corresponding to each of the plurality of to-be-processed segments, and determine an adjustment mark corresponding to each bit of frequency domain coefficient in the target frequency domain coefficient.

The determining module 1203 is configured to determine, for each of the plurality of to-be-processed segments, unit embedding information corresponding to each of the plurality of to-be-processed segments based on a target frequency domain coefficient corresponding to the to-be-processed segment and an adjustment mark corresponding to each bit of frequency domain coefficient in the target frequency domain coefficient.

The determining module 1203 is further configured to determine positioning information based on the unit embedding information corresponding to the plurality of to-be-processed segments.

The positioning module 1204 is configured to position, according to a position of the positioning information, watermark information from the unit embedding information corresponding to the plurality of to-be-processed segments.

In some embodiments, the determining module is further configured to determine, for any to-be-processed segment, frequency domain energy values corresponding to different adjustment marks based on a target frequency domain coefficient corresponding to the to-be-processed segment and an adjustment mark corresponding to each bit of frequency domain coefficient in the target frequency domain coefficient; and determine, based on the frequency domain energy values corresponding to the different adjustment marks, the unit embedding information corresponding to the to-be-processed segment.

In some embodiments, the adjustment mark includes a first adjustment mark and a second adjustment mark; and the determining module is further configured to determine, based on the frequency domain energy values corresponding to the different adjustment marks, a frequency domain energy mean value corresponding to the first adjustment mark and a frequency domain energy mean value corresponding to the second adjustment mark; and determine the unit embedding information corresponding to the to-be-processed segment based on a difference between the frequency domain energy mean value corresponding to the first adjustment mark and the frequency domain energy mean value corresponding to the second adjustment mark.

In some embodiments, the determining module is further configured to extract, in the unit embedding information corresponding to the plurality of to-be-processed segments, at least two segments of unit embedding information sequences having a preset length from a preset position, where each segment of unit embedding information sequence includes a plurality of pieces of unit embedding information; and obtain, based on the at least two segments of extracted unit embedding information sequences, the positioning information through restoration.

In some embodiments, the at least two segments of unit embedding information sequences having the preset length include a first restoration sequence and a second restoration sequence, and the determining module is further configured to compare the first restoration sequence with the second restoration sequence; determine the positioning information based on the first restoration sequence and the second restoration sequence in a case that a similarity between the first restoration sequence and the second restoration sequence is less than a threshold.

In some embodiments, the positioning module is further configured to use, according to the position of the positioning information, a plurality of pieces of unit embedding information that are adjacent to the positioning information and whose lengths reach a preset length in the unit embedding information corresponding to the plurality of to-be-processed segments as the watermark information.

In some embodiments, the apparatus further includes a verification module, configured to extract the positioned watermark information; and obtain source watermark information, comparing extracted watermark information with the source watermark information, and perform verification on a release source of the to-be-detected audio based on a comparison result.

The modules in the foregoing audio detection apparatus may be implemented entirely or partially by software, hardware, or a combination thereof. The foregoing modules may be built in or independent of a processor of a computer device in a hardware form, or may be stored in a memory of the computer device in a software form, so that the processor invokes and performs an operation corresponding to each of the foregoing modules.

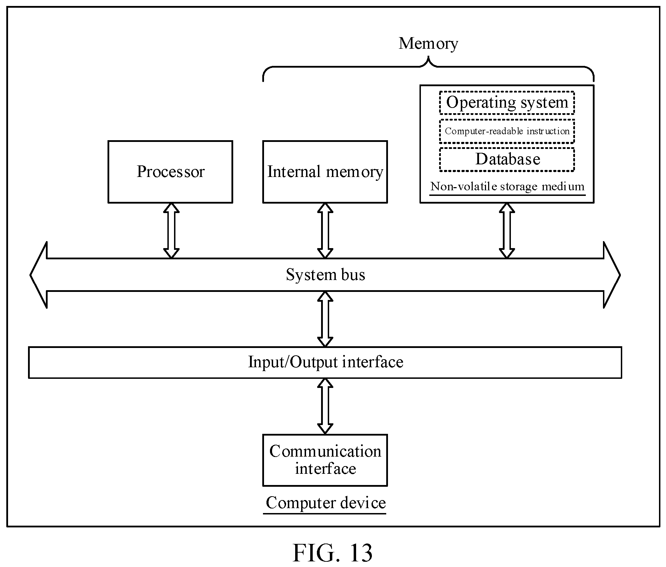

In an embodiment, a computer device is provided. The computer device may be the terminal or the server in the foregoing embodiments. An example in which the computer device is a server is used for description below. An internal structure diagram thereof may be shown in FIG. 13. The computer device includes a processor, a memory, an input/output (I/O) interface, and a communication interface. The processor, the memory, and the input/output interface are connected through a system bus, and the communication interface is connected to the system bus through the input/output interface. The processor of the computer device is configured to provide computing and control capabilities. The memory of the computer device includes a non-volatile storage medium and an internal memory. The non-volatile storage medium stores an operating system, a computer-readable instruction, and a database. The internal memory provides an environment for running of the operating system and the computer-readable instructions in the non-volatile storage medium. The database of the computer device is configured to store audio data and the like. The input/output interface of the computer device is configured to exchange information between the processor and an external device. The communication interface of the computer device is configured to communicate with an external terminal through a network connection. The computer-readable instruction is executed by the processor to implement an audio processing method or an audio detection method.

A person skilled in the art may understand that, the structure shown in FIG. 13 is only a block diagram of a part of a structure related to a solution of this application and does not limit the computer device to which the solution of this application is applied. Specifically, the computer device may include more or fewer components than those in the drawings, or some components are combined, or a different component deployment is used.

In an embodiment, a computer device is further provided, including a memory and one or more processors. The memory has computer-readable instructions stored therein, the computer-readable instructions, when executed by the processors, causing the one or more processors to perform operations of the various method embodiments described above.

In an embodiment, one or more computer-readable storage media are provided, having computer-readable instructions stored therein, the computer-readable instructions, when executed by one or more processors, causing the one or more processors to perform operations of the various method embodiments described above.

In an embodiment, a computer-readable instruction product is provided, including computer-readable instructions, the computer-readable instructions, when executed by a processor, performing operations of the various method embodiments described above.

A person of ordinary skill in the art may understand that all or some of the procedures of the methods of the foregoing embodiments may be implemented by computer-readable instructions instructing relevant hardware. The computer-readable instructions may be stored in a non-volatile computer-readable storage medium. When the computer-readable instructions are executed, the procedures of the embodiments of the foregoing methods may be included. Any reference to a memory, a database, or another medium used in the embodiments provided in this application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM) or an external cache. For the purpose of description instead of limitation, the RAM is available in a plurality of forms, such as a static random access memory (SRAM) or a dynamic random access memory (DRAM). The database involved in the embodiments provided in this application may include at least one of a relational database and a non-relational database. The non-relational database may include a blockchain-based distributed database, but is not limited thereto. The processor involved in the embodiments provided in this application may be a general-purpose processor, a central processing unit, a graphics processing unit, a digital signal processor, a programmable logic device, a quantum computing-based data processing logic device, and are not limited thereto.

Each technical feature in the foregoing embodiments may be combined randomly. For simplified description, not all possible combinations of each technical feature in the foregoing embodiments are described. However, the combinations of the technical features shall be considered to fall within the scope of the specification as long as the combinations are not contradictory.

The foregoing embodiments only show several implementations of this application and are described in detail, but they are not to be construed as a limitation to the patent scope of this application. A person of ordinary skill in the art may further make several variations and improvements without departing from the idea of this application, and the variations and improvements all fall within the protection scope of this application. Therefore, the protection scope of this patent application is to be subject to the appended claims.

## Claims

1. An audio processing method, performed by a computer device, the method comprising:

    segmenting an input audio to obtain a plurality of audio segments, and determining an original frequency domain coefficient for each of the plurality of audio segments;
    obtaining reference information comprising watermark information and positioning information for positioning the watermark information;
    determining, for each of the plurality of audio segments and based on the reference information, adjustment information for adjusting the original frequency domain coefficient of the respective audio segment;
    performing inverse frequency domain transformation on the adjustment information, to obtain a reference segment corresponding to the respective audio segment; and
    combining, for each of the plurality of audio segments, the respective audio segment and the corresponding reference segment, to obtain a target audio segment, thereby obtaining a plurality of target audio segments; and obtaining, based on the plurality of target audio segments, a target audio.

2. The method according to claim 1, wherein the positioning information in the reference information comprises at least first positioning information and second positioning information, and the first positioning information and the second positioning information meet a preset similarity condition.

3. The method according to claim 1, wherein the original frequency domain coefficient comprises L bits of frequency domain coefficients, L is a positive integer greater than 1, the reference information comprises a plurality of pieces of unit embedding information, and the determining, for each of the plurality of audio segments and based on the reference information, adjustment information for adjusting the original frequency domain coefficient of the respective audio segment, comprises:

    allocating a piece of unit embedding information to each audio segment from the reference information;
    determining, for any audio segment, an adjustment mark matching each of L bits of frequency domain coefficients of the audio segment;
    determining, based on the unit embedding information allocated for the audio segment, target adjustment modes respectively corresponding to L adjustment marks; and
    determining, according to the target adjustment modes respectively corresponding to the L adjustment marks, the adjustment information for adjusting the original frequency domain coefficient of the respective audio segment.

4. The method according to claim 3, wherein the allocating a piece of unit embedding information to each audio segment from the reference information comprises:

    determining, according to a sequence of the unit embedding information in the reference information, current unit embedding information from the reference information;
    determining, according to a time sequence of the audio segment, a current audio segment from the plurality of audio segments;
    allocating the current unit embedding information to the current audio segment;
    using a next piece of unit embedding information as current unit embedding information of a next allocation, and using a next audio segment of the current audio segment as a current audio segment of the next allocation;
    returning to the operation of allocating the current unit embedding information to the current audio segment and continuing to perform the operation until last-bit unit embedding information in the reference information is allocated; and
    using first-bit unit embedding information in the reference information as current unit embedding information of a next cycle, and performing a plurality of cycle allocations until all audio segments are allocated with the unit embedding information.

5. The method according to claim 3, wherein the determining, for any audio segment, an adjustment mark matching each of L bits of frequency domain coefficients of the audio segment comprises:

    obtaining, for any audio segment, an adjustment mask corresponding to the audio segment, wherein the adjustment mask comprises the L adjustment marks; and
    using an $l^{th}$ adjustment mark in the adjustment mask as an adjustment mark of an $l^{th}$ bit of frequency domain coefficient in L bits of frequency domain coefficients of the audio segment, wherein l is a positive integer greater than 1 and less than or equal to L.

6. The method according to claim 3, wherein a value type of the unit embedding information comprises a first type and a second type, and for any adjustment mark, an adjustment direction of a target adjustment mode determined based on the unit embedding information of the first type is opposite to an adjustment direction of a target adjustment mode determined based on the unit embedding information of the second type.

7. The method according to claim 6, wherein the determining, based on the unit embedding information allocated for the audio segment, target adjustment modes respectively corresponding to L adjustment marks comprises:

determining a value type of the unit embedding information allocated for the audio segment;
in a case that the value type is the first type, using initial adjustment modes respectively corresponding to the L adjustment marks as the target adjustment modes respectively corresponding to the L adjustment marks; and
in a case that the value type is the second type, performing reverse processing on the initial adjustment modes respectively corresponding to the L adjustment marks, to obtain the target adjustment modes respectively corresponding to the L adjustment marks.

8. The method according to any one of claims 1 to 7, wherein the obtaining, based on the plurality of target audio segments, a target audio comprises:

determining a time sequence corresponding to each of the plurality of target audio segments; and
splicing the plurality of target audio segments according to the time sequence corresponding to each target audio segment, to obtain the target audio, wherein the target audio is embedded with the watermark information.

9. An audio detection method, comprising:

segmenting an input audio to obtain a plurality of to-be-processed segments;
performing frequency domain transformation on each of the plurality of to-be-processed segments, to obtain a target frequency domain coefficient corresponding to each of the plurality of to-be-processed segments, and determining an adjustment mark corresponding to each bit of frequency domain coefficient in the target frequency domain coefficient;
determining, for each of the plurality of to-be-processed segments, unit embedding information corresponding to each of the plurality of to-be-processed segments based on a target frequency domain coefficient corresponding to the to-be-processed segment and an adjustment mark corresponding to each bit of frequency domain coefficient in the target frequency domain coefficient;

determining positioning information based on unit embedding information corresponding to the plurality of to-be-processed segments; and
positioning, according to a position of the positioning information, watermark information from the unit embedding information corresponding to the plurality of to-be-processed segments.

10. The method according to claim 9, wherein the determining, for each of the plurality of to-be-processed segments, unit embedding information corresponding to each of the plurality of to-be-processed segments based on a target frequency domain coefficient corresponding to the to-be-processed segment and an adjustment mark corresponding to each bit of frequency domain coefficient in the target frequency domain coefficient comprises:

determining, for each of the plurality of to-be-processed segments, frequency domain energy values corresponding to different adjustment marks based on a target frequency domain coefficient corresponding each of plurality of to-be-processed segments and an adjustment mark corresponding to each bit of frequency domain coefficient in the target frequency domain coefficient; and
determining, based on the frequency domain energy values corresponding to the different adjustment marks, unit embedding information corresponding to each of plurality of to-be-processed segments.

11. The method according to claim 10, wherein the adjustment mark comprises a first adjustment mark and a second adjustment mark; and the determining, based on the frequency domain energy values corresponding to the different adjustment marks, unit embedding information corresponding to each of the plurality of to-be-processed segments comprises:

determining, based on the frequency domain energy values corresponding to the different adjustment marks, a frequency domain energy mean value corresponding to the first adjustment mark and a frequency domain energy mean value corresponding to the second adjustment mark; and
determining the unit embedding information corresponding to each of the plurality of to-be-processed segments based on a difference between the frequency domain energy mean value corresponding to the first adjustment mark and the frequency domain energy mean value corresponding to the second adjustment mark.

12. The method according to claim 9, wherein the determining positioning information based on unit embedding information corresponding to the plurality of to-be-processed segments comprises:

> extracting, in the unit embedding information corresponding to the plurality of to-be-processed segments, at least two segments of unit embedding information sequences having a preset length from a preset position, wherein each segment of unit embedding information sequence comprises a plurality of pieces of unit embedding information; and
> obtaining, based on the at least two segments of extracted unit embedding information sequences, the positioning information through restoration.

13. The method according to claim 12, wherein the at least two segments of unit embedding information sequences having the preset length comprise a first restoration sequence and a second restoration sequence, and the obtaining, based on the at least two segments of extracted unit embedding information sequences, the positioning information through restoration comprises:

> comparing the first restoration sequence with the second restoration sequence; and
> determining the positioning information based on the first restoration sequence and the second restoration sequence in a case that a similarity between the first restoration sequence and the second restoration sequence is less than a threshold.

14. The method according to claim 9, wherein the positioning, according to a position of the positioning information, watermark information from the unit embedding information corresponding to the plurality of to-be-processed segments comprises:
using, according to the position of the positioning information, a plurality of pieces of unit embedding information that are adjacent to the positioning information and whose lengths reach a preset length in the unit embedding information corresponding to the plurality of to-be-processed segments as the watermark information.

15. The method according to any one of claims 9 to 14, wherein the method further comprises:

> extracting the positioned watermark information; and
> obtaining source watermark information, comparing extracted watermark information with the source watermark information, and performing verification on a release source of the to-be-detected audio based on a comparison result.

16. An audio processing apparatus, comprising:

> a segmentation module, configured to segment an input audio, to obtain a plurality of audio segments, and determine an original frequency domain coefficient for each of the plurality of audio segments;
> a watermark module, configured to obtain reference information comprising watermark information and positioning information for positioning the watermark information;
> an adjustment module, configured to determine, for each of the plurality of audio segments and based on the reference information, adjustment information for adjusting the original frequency domain coefficient of the respective audio segment;
> the adjustment module being further configured to perform inverse frequency domain transformation on the adjustment information, to obtain a reference segment corresponding to respective the audio segment; and
> a combination module, configured to combine, for each of the plurality of audio segments, the respective audio segment and the corresponding reference segment, to obtain a target audio segment, thereby obtaining a plurality of target audio segments ;and obtain, based on the plurality of target audio segments, a target audio.

17. An audio detection apparatus, comprising:

> a segmentation module, configured to segment an input audio to obtain a plurality of to-be-processed segments;
> a transformation module, configured to perform frequency domain transformation on each of the plurality of to-be-processed segments, to obtain a target frequency domain coefficient corresponding to each of the plurality of to-be-processed segments, and determine an adjustment mark corresponding to each bit of frequency domain coefficient in the target frequency domain coefficient;
> a determining module, configured to determine, for each of the plurality of to-be-processed segments, unit embedding information corresponding to each of the plurality of to-be-processed segments based on a target frequency domain coefficient corresponding to the to-be-processed segment and an adjustment mark corresponding to each bit of frequency domain coefficient in the target frequency domain coefficient;
> the determining module being further configured to determine positioning information based on unit embedding information corresponding to the plurality of to-be-processed segments; and

a positioning module, configured to position, according to a position of the positioning information, watermark information from the unit embedding information corresponding to the plurality of to-be-processed segments.

18. A computer device, comprising a memory and one or more processors, the memory having computer-readable instructions stored therein, and the computer-readable instructions, when executed by the processors, causing the one or more processors to perform the method according to any one of claims 1 to 15.

19. One or more non-volatile readable storage media, having computer-readable instructions stored therein, the computer-readable instructions, when executed by one or more processors, causing the one or more processors to perform the method according to any one of claims 1 to 15.

20. A computer-readable instruction product, comprising computer-readable instructions, the computer-readable instructions, when executed by a processor, performing the method according to any one of claims 1 to 15.

FIG. 1

S202

Obtain to-be-processed audio, segment the to-be-processed audio to obtain a plurality of audio segments, and determine an original frequency domain coefficient corresponding to each audio segment

S204

Obtain to-be-embedded information, the to-be-embedded information including mark information and watermark information, the mark information being configured for positioning the watermark information

S206

Determine, for any audio segment based on the to-be-embedded information, adjustment information corresponding to an original frequency domain coefficient of the audio segment

S208

Perform inverse frequency domain transformation on the adjustment information, to obtain a to-be-superimposed segment corresponding to the audio segment

S210

Superimpose, for any audio segment, the audio segment with a corresponding to-be-superimposed segment, to obtain a target audio segment, and obtain, based on a plurality of target audio segments, target audio embedded with the watermark information

FIG. 2

| SYNC1 | SYNC2 | WM |
|-------|-------|-----|

Mark information     Watermark information

FIG. 3

Coefficient is increased    Coefficient is reduced    Coefficient keeps unchanged

FFT coefficient

Adjustment mask

FIG. 4

| | Coefficient is increased | | No adjustment mark is set |
|---|---|---|---|

FFT coefficient

| | | | | | | | | | | |
|---|---|---|---|---|---|---|---|---|---|---|

Adjustment mask

FIG. 5

S602

Obtain to-be-detected audio, and segment the to-be-detected audio to obtain a plurality of to-be-processed segments

↓ S604

Perform frequency domain transformation on each to-be-processed segment to obtain a target frequency domain coefficient corresponding to each to-be-processed segment, and determine an adjustment mark corresponding to each bit of frequency domain coefficient in the target frequency domain coefficient

↓ S606

Determine, for any to-be-processed segment, unit embedding information corresponding to the to-be-processed segment based on a target frequency domain coefficient corresponding to the to-be-processed segment and an adjustment mark corresponding to each bit of frequency domain coefficient in the target frequency domain coefficient

↓ S608

Determine mark information based on the unit embedded information corresponding to the plurality of to-be-processed segments

↓ S610

Position watermark information from the unit embedding information corresponding to the plurality of to-be-processed segments according to a position of the mark information

FIG. 6

FIG. 7

To-be-processed audio

Frequency domain coefficient

Adjustment mark

Audio segment 1

Audio segment 2

Audio segment 3

⋮

Audio segment N

Adjustment mask 1

Adjustment mask 2

Adjustment mask 3

⋮

Adjustment mask N

Up processing          Down processing          Keep unchanged

FIG. 8

Window length L

To-be-detected audio

To-be-processed segment

FIG. 9

| To-be-detected audio | → | To-be-processed segment | → | Frequency domain coefficient | → | Frequency domain energy mean value | → | Detect a synchronization code | → | Watermark information |

FIG. 10

Audio watermark processing apparatus 1100

~1101
Segmentation module

~1103
Adjustment module

~1102
Watermark module

~1104
Superimposition module

FIG. 11

Audio watermark detection apparatus 1200

~1201
Segmentation module

~1203
Determining module

~1202
Transformation module

~1204
Positioning module

FIG. 12

Memory

Operating system

Computer-readable instruction

Database

Non-volatile storage medium

Processor

Internal memory

System bus

Input/Output interface

Communication
interface

Computer device

FIG. 13

## INTERNATIONAL SEARCH REPORT

| International application No. |
| --- |
| **PCT/CN2023/125448** |

| A. | CLASSIFICATION OF SUBJECT MATTER |
| --- | --- |

G10L 19/018(2013.01)i

According to International Patent Classification (IPC) or to both national classification and IPC

| B. | FIELDS SEARCHED |
| --- | --- |

Minimum documentation searched (classification system followed by classification symbols)

IPC: G10L 19

Documentation searched other than minimum documentation to the extent that such documents are included in the fields searched

Electronic data base consulted during the international search (name of data base and, where practicable, search terms used)

CNABS; WPABS; CNTXT; ENTXT: 定位, 同步, 水印, 裁剪, 剪裁, 剪辑, 攻击, 鲁棒, 调整, 系数, 幅度, 幅值, 叠加, water print, water mark, clip, attack, adjust, robust

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115602179 A (TENCENT TECHNOLOGY (SHENZHEN) CO., LTD.) 13 January 2023 (2023-01-13)<br>claims 1-19 | 1-20 |
| A | CN 113782041 A (SUIRUI TECHNOLOGY GROUP CO., LTD.) 10 December 2021 (2021-12-10)<br>entire document | 1-20 |
| A | CN 103221997 A (FRAUNHOFER-GESELLSCHAFT ZUR FORDERUNG DER ANGEWANDTEN FORSCHUNG E.V.) 24 July 2013 (2013-07-24)<br>entire document | 1-20 |
| A | CN 111341329 A (BEIJING DAJIA INTERNET INFORMATION TECHNOLOGY CO., LTD.) 26 June 2020 (2020-06-26)<br>entire document | 1-20 |
| A | JP 2016038455 A (VIDEO RESEARCH LTD.) 22 March 2016 (2016-03-22)<br>entire document | 1-20 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 February 2024** | **02 February 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

# EP 4 618 077 A1

## INTERNATIONAL SEARCH REPORT

| International application No. |
|---|
| **PCT/CN2023/125448** |

### C. DOCUMENTS CONSIDERED TO BE RELEVANT

| Category* | Citation of document, with indication, where appropriate, of the relevant passages | Relevant to claim No. |
|---|---|---|
| A | WO 2015078502 A1 (FUNDACIO PER A LA UNIVERSITAT OBERTA DE CATALUNYA) 04 June 2015 (2015-06-04) entire document | 1-20 |

Form PCT/ISA/210 (second sheet) (July 2022)

## INTERNATIONAL SEARCH REPORT
### Information on patent family members

International application No.

**PCT/CN2023/125448**

| Patent document cited in search report | | | Publication date (day/month/year) | Patent family member(s) | | | Publication date (day/month/year) |
|---|---|---|---|---|---|---|---|
| CN | 115602179 | A | 13 January 2023 | None | | | |
| CN | 113782041 | A | 10 December 2021 | None | | | |
| CN | 103221997 | A | 24 July 2013 | EP | 2619757 | A1 | 31 July 2013 |
| | | | | EP | 2619757 | B1 | 08 October 2014 |
| | | | | WO | 2012038344 | A1 | 29 March 2012 |
| | | | | MX | 2013003113 | A | 06 September 2013 |
| | | | | EP | 2431970 | A1 | 21 March 2012 |
| | | | | ES | 2526783 | T3 | 15 January 2015 |
| | | | | US | 2013216090 | A1 | 22 August 2013 |
| | | | | US | 9514500 | B2 | 06 December 2016 |
| | | | | RU | 2013118024 | A | 10 November 2014 |
| | | | | RU | 2586877 | C2 | 10 June 2016 |
| | | | | ZA | 201302800 | B | 23 December 2013 |
| | | | | SG | 189027 | A1 | 31 May 2013 |
| | | | | CA | 2811806 | A1 | 29 March 2012 |
| | | | | CA | 2811806 | C | 19 July 2016 |
| | | | | JP | 2013545121 | A | 19 December 2013 |
| | | | | JP | 5749804 | B2 | 15 July 2015 |
| | | | | MY | 164737 | A | 30 January 2018 |
| | | | | KR | 20130086226 | A | 31 July 2013 |
| | | | | KR | 101520454 | B1 | 15 May 2015 |
| | | | | AU | 2011304463 | A1 | 18 April 2013 |
| | | | | AU | 2011304463 | B2 | 09 July 2015 |
| | | | | US | 2017078519 | A1 | 16 March 2017 |
| | | | | US | 9917978 | B2 | 13 March 2018 |
| | | | | BR | 112013006873 | A2 | 19 September 2017 |
| | | | | BR | 112013006873 | B1 | 19 January 2021 |
| | | | | PL | 2619757 | T3 | 31 March 2015 |
| CN | 111341329 | A | 26 June 2020 | WO | 2021155697 | A1 | 12 August 2021 |
| | | | | EP | 3933835 | A1 | 05 January 2022 |
| | | | | EP | 3933835 | A4 | 07 September 2022 |
| | | | | US | 2022020383 | A1 | 20 January 2022 |
| JP | 2016038455 | A | 22 March 2016 | None | | | |
| WO | 2015078502 | A1 | 04 June 2015 | EP | 3078024 | A1 | 12 October 2016 |
| | | | | EP | 3078024 | B1 | 07 November 2018 |
| | | | | ES | 2710518 | T3 | 25 April 2019 |
| | | | | US | 2017148451 | A1 | 25 May 2017 |
| | | | | US | 9978382 | B2 | 22 May 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022114967096